(19)

Europäisches
Patentamt
European
Patent Office
Office européen
des brevets

(11)     **EP 3 236 698 A1**

(12)                        **EUROPEAN PATENT APPLICATION**

(43) Date of publication:
**25.10.2017 Bulletin 2017/43**

(51) Int Cl.:
***H04W 52/28*** *(2009.01)*

(21) Application number: **17173360.3**

(22) Date of filing: **04.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2012 US 201261721967 P**

(62) Document number(s) of the earlier application(s) in
accordance with Art. 76 EPC:
**13795347.7 / 2 915 382**

(71) Applicant: **Interdigital Patent Holdings, Inc.
Wilmington, DE 19809-3727 (US)**

(72) Inventors:
• **OTERI, Oghenekome**
  **San Diego, California 92127 (US)**
• **XIA, Pengfei**
  **San Diego, California 92130 (US)**
• **LOU, Hanqing**
  **Syosset, New York 11791 (US)**

• **GHOSH, Monisha**
  **Chappaqua, New York 10514 (US)**
• **OLESEN, Robert L.**
  **Huntington, New York 11743 (US)**
• **SHAH, Nirav B.**
  **San Diego, California 92127 (US)**
• **LA SITA, Frank**
  **Setauket, New York 11733 (US)**

(74) Representative: **Heinze, Ekkehard
Meissner Bolte Patentanwälte
Rechtsanwälte Partnerschaft mbB
Postfach 86 06 24
81633 München (DE)**

Remarks:
This application was filed on 30-05-2017 as a
divisional application to the application mentioned
under INID code 62.

(54)     **POWER CONTROL METHODS AND PROCEDURES FOR WIRELESS LOCAL AREA
          NETWORKS**

(57)     A method and apparatus is described herein for
performing loop power control and transmission power
control (TPC) in a wireless network. Described herein
are methods including using separate power control
loops for communication with an entire wireless network
and for point-to-point (P2P) transmissions and separate
power control loops for omni-directional and directional
beamformed transmissions. Also described herein are
methods and apparatuses for requesting clear channel
assessment (CCA) measurements and adjusting CCA
thresholds and transmission power based on the reported measurements. Methods and apparatuses are also
described wherein access points (APs) coordinate transmission power to reduce interference with each other and
to determine optimal transmission power to each mobile
station (STA).

*FIG. 35*

**Description**

**CROSS REFERENCE TO RELATED APPLICATIONS**

This application claims the benefit of U.S. Provisional Application Serial No. 61/721,967 filed November 2, 2012, the contents of which are hereby incorporated by reference herein.

**BACKGROUND**

Transmit Power Control (TPC) in a wireless network may be used for the following reasons: minimize interference between nodes, improve wireless link quality, reduce energy consumption, control the topology, reduce interference with satellites/radar in 5 GHz mode, or improve coverage in the network. The 802.11 standards body emphasizes simplicity in algorithms with receivers providing TPC recommendations and each transmitter deciding on its specific transmit power based on the manufacturer's own implementation concerns and regulatory requirements. There is a need for TPC algorithms that address issues in wireless local area network (WLAN) conditions, determining optimal TPC loop transmission power levels, interference mitigation, multiple channels and frequency bands, TPC among multiple transmitters, and TPC during device initialization.

**SUMMARY**

A method and apparatus is described herein for performing loop power control and transmission power control (TPC) in a wireless network. Described herein are methods including using separate power control loops for communication with an entire wireless network and for point-to-point or peer-to-peer (P2P) transmissions and separate power control loops for omni-directional and directional beamformed transmissions. Also described herein are methods and apparatuses for requesting clear channel assessment (CCA) measurements and adjusting CCA thresholds and transmission power based on the reported measurements. Methods and apparatuses are also described wherein access points (APs) coordinate transmission power to reduce interference with each other and to determine optimal transmission power to each mobile station (STA).

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 2 is a diagram of a WLAN network level and data transmission power control loops;
FIG. 3 is a diagram of directional and quasi-omnidirectional power control loops;
FIG. 4 is a flow diagram of a multi-level TPC procedure;
FIG. 5 is a diagram of a beacon interval structure;
FIG. 6 is a diagram of an example 4-level TPC element with an explicit frame type and one subtype signaling;
FIG. 7 is a diagram of an example 4-level TPC element with an implicit frame type and one subtype signaling;
FIG. 8 is an example of multi-level TPC labeling;
FIG. 9 is a diagram of a modified TPC request element;
FIG. 10 is a diagram of a modified TPC report element;
FIG. 11 is a diagram of a modified directional multi-gigabit (DMG) link margin element;
FIG. 12 is a diagram of a modified link margin request/response element for multiple levels simultaneously;
FIG. 13 is a second example diagram of a modified link margin request/response element for multiple levels simultaneously;
FIG. 14 is a diagram of an aggregated link margin response element;
FIG. 15 is a diagram of a TPC SIG for PHY layer TPC;
FIG. 16 is a diagram of TPC SIG timing in a data frame;
FIG. 17 is a diagram of a network with partially compensated power control;
FIG. 18 is a flow diagram of a fractional power procedure;

FIG. 19 is a diagram of a proposed link margin response frame;

FIG. 20 is a diagram of a proposed DMG link margin response frame;

FIG. 21 is a diagram of a TPC SIG for a partially compensated TPC;

FIG. 22 is a diagram of a Group ID assignment frame;

FIG. 23 is a diagram of a TPC SIG field for partially compensated TPC with a Group ID;

FIG. 24 is a diagram of a closed loop TPC request frame;

FIG. 25 is a diagram of a closed loop TPC response/ACK frame;

FIG. 26A is a first diagram of an example of truncated or short link margin response frames;

FIG. 26B is a second diagram of an example of truncated or short link margin response frames

FIG. 27 is a flow diagram of a continuous closed loop TPC procedure;

FIG. 28 is a diagram of multiple power levels in a transmit-receive WLAN session for different multiple access schemes;

FIG. 29 is a diagram of an updated power capability element format;

FIG. 30 is a diagram of an extended capabilities element format;

FIG. 31 is a diagram of a TPC indicator bit in a legacy SIG field;

FIG. 32 is a diagram of a TPC short training field;

FIG. 33 is a flow diagram for a procedure for TPC with a TPC change boundary using the TPC-STF;

FIG. 34 is a diagram of a TPC information element (IE) indicating power levels for different frame types;

FIG. 35 is a flow diagram of an example procedure for determining whether to adjust a CCA threshold and/or transmission power;

FIG. 36 is a diagram of a CCA modification element;

FIG. 37A is a diagram of a CCA measurement request IE;

FIG. 37B is a diagram of an updated measurement report field format for a CCA report;

FIG. 38 is a diagram of an example of an interference-limited network;

FIG. 39 is a flow diagram of a procedure for coverage adjustment using TPC in interference limited systems;

FIG. 40 is a diagram of a modified neighbor report element;

FIG. 41A is a diagram of an example of multiple users sharing multiple frequency channels;

FIG. 41B is a flow diagram of an example procedure for implementing multi-band and/or multi-channel TPC;

FIG. 41C is a diagram of an example TPC multi-band IE;

FIG. 42 is a diagram of an example of standalone uplink multiuser parallel channel access (MU-PCA);

FIG. 43 is a diagram of an example of a TPC request and response;

FIG. 44 is a diagram of a frame format for a transmit power control request from an associated AP;

FIG. 45 is a diagram of a frame format for a transmit power control request from the assistant APs;

FIG. 46 is a diagram of a frame format for a transmit power control response to multiple transmitters; and

FIG. 47 is a diagram of a frame format for a transmit power control command for multiple transmitters.

## DETAILED DESCRIPTION

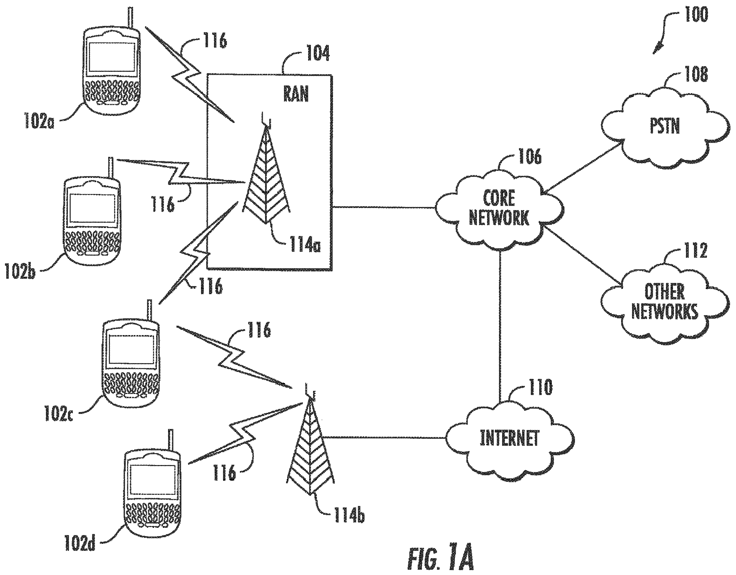

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the other networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple-output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

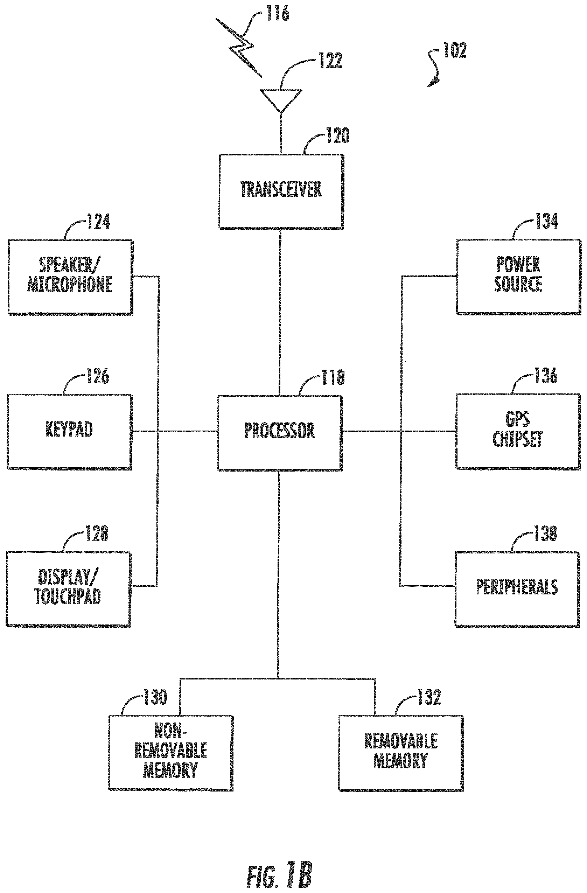

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

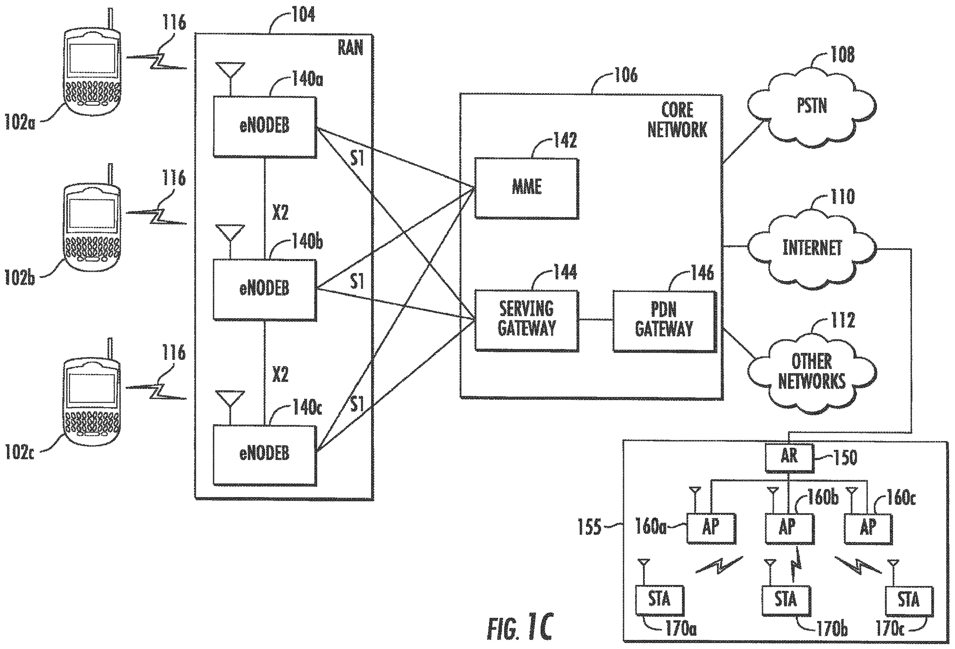

FIG. 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 1C, the eNode-Bs 140a, 140b, 140c may communicate with one another over an X2 interface.

The core network 106 shown in FIG. 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices. An access router (AR) 150 of a wireless local area network (WLAN) 155 may be in communication with the Internet 110. The AR 150 may facilitate communications between APs 160a, 160b, and 160c. The APs 160a, 160b, and 160c may be in communication with STAs 170a, 170b, and 170c.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

As used in the embodiments described hereinafter, a STA may include, but is not limited to, a WTRU, an AP, or a communication device.

A WLAN in Infrastructure Basic Service Set (BSS) mode has an Access Point (AP) for the BSS and one or more stations (STAs) associated with the AP. The AP typically has access or interface to a Distribution System (DS) or another type of wired/wireless network that carries traffic in and out of the BSS. Traffic to STAs that originates from outside the BSS arrives through the AP and is delivered to the STAs. Traffic originating from STAs to destinations outside the BSS may be sent to the AP to be delivered to the respective destinations. Traffic between STAs within the BSS may also be sent through the AP where the source STA sends traffic to the AP and the AP delivers the traffic to the destination STA. Such traffic between STAs within a BSS may be considered P2P traffic. Such P2P traffic may also be sent directly between the source and destination STAs with a direct link setup (DLS), and example include using an 802.11e DLS, an 802.11z tunnelled DLS (TDLS), or WiFi Peer-to-Peer (P2P). Hereinafter any of these P2P approaches are referred to as P2P communications. A WLAN using an Independent BSS (IBSS) mode does not have an AP, and/or STAs, communicating directly with each other. This mode of communication is referred to as an "ad-hoc" mode of communication.

Using the 802.11ac infrastructure mode of operation, the AP may transmit a beacon on a fixed channel, usually the primary channel. This channel may be 20 MHz wide, and is the operating channel of the BSS. This channel may also be used by the STAs to establish a connection with the AP. The fundamental channel access mechanism in an 802.11 system is Carrier Sense Multiple Access with Collision Avoidance (CSMA/CA). In this mode of operation, every STA, including the AP, will sense the primary channel. If the channel is detected to be busy, the STA backs off. Hence only one STA may transmit at any given time in a given BSS.

In 802.11n, High Throughput (HT) STAs may also use a 40 MHz wide channel for communication. This is achieved by combining the primary 20 MHz channel with an adjacent 20 MHz channel to form a 40 MHz wide contiguous channel.

In 802.11ac, Very High Throughput (VHT) STAs may support 20MHz, 40 MHz, 80 MHz, and 160 MHz wide channels. The 40 MHz and 80 MHz channels are formed by combining contiguous 20 MHz channels, similar to 802.11n described above. A 160 MHz channel may be formed either by combining eight contiguous 20 MHz channels, or by combining two non-contiguous 80 MHz channels, this may also be referred to as an 80+80 configuration. For the 80+80 configuration, the data after channel encoding is passed through a segment parser that divides it into two streams. IFFT and time domain processing are done on each stream separately. The streams are then mapped onto the two channels, and the data is transmitted. At the receiver, this mechanism is reversed, and the combined data is sent to the medium access control (MAC) layer.

Sub-1 GHz modes of operation are supported by 802.11af and 802.11ah. For these specifications, the channel operating bandwidths and carriers are reduced relative to those used in 802.11n and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. A possible use case for 802.11ah is support for Meter Type Control (MTC) devices in a macro coverage area. MTC devices may have limited capabilities including only support for limited bandwidths, but also include a requirement for a long battery life.

WLAN systems which support multiple channels and channel widths, such as 802.11n, 802.11ac, 802.11af, and 802.11ah, include a channel which is designated as the primary channel. The primary channel may, but not necessarily, have a bandwidth equal to the largest common operating bandwidth supported by all STAs in the BSS. The bandwidth of the primary channel is therefore limited by the STA, of all STAs in operating in a BSS, which supports the smallest bandwidth operating mode. In the example of 802.11ah, the primary channel may be 1 MHz wide if there are STAs (e.g., MTC type devices) that only support a 1 MHz mode even if the AP and other STAs in the BSS may support a 2 MHz, 4 MHz, 8 MHz, 16 MHz, or other channel bandwidth operating modes. All carrier sensing and NAV settings depend on the status of the primary channel; i.e., if the primary channel is busy, for example, due to a STA supporting only a 1 MHz operating mode is transmitting to the AP, then the entire available frequency bands are considered busy even though a majority of it stays idle and available.

In the United States, the available frequency bands which may be used by 802.11ah are from 902 MHz to 928 MHz. In Korea it is from 917.5 MHz to 923.5 MHz; and in Japan, it is from 916.5 MHz to 927.5 MHz. The total bandwidth available for 802.11ah is 6 MHz to 26 MHz depending on the country code.

Transmit Power Control (TPC) in a wireless network may be used for the following reasons: minimize interference between nodes, improve wireless link quality, reduce energy consumption, control the topology, reduce interference with satellites/radar in 5 GHz mode, or improve coverage in the network.

Existing cellular standards have different methods of implementing TPC. In Wideband Code Division Multiple Access (WCDMA) and High Speed Packet Access (HSPA), TPC is a combination of open loop power control, outer loop power control, and inner loop power control. This is to ensure that the power at the receiver in the uplink is equal for all wireless transmit/receive units (WTRUs) associated with the Node B or base station. This is important due to the near-far problem caused by the multiple access scheme (Code Division Multiple Access or CDMA). As all the WTRUs utilize the entire spectrum, the received power of WTRUs far away from the base station may be overwhelmed by those close to the base station if the transmit power of the different WTRUs is not managed.

In open loop power control, which occurs between the WTRU and the Radio Network Controller (RNC), each WTRU transmitter sets its output power to a specific value to compensate for the path loss. This power control sets the initial uplink and downlink transmission powers when a WTRU is accessing the network.

In outer loop power control, which also occurs between the WTRU and the RNC, long term channel variations are compensated for. This power control is used to maintain the quality of communication at the level of bearer service quality requirement, while using as low a power as possible. Uplink outer loop power control is responsible for setting a target Signal to Interference Ratio (SIR) in the Node B for each individual uplink inner loop power control. It is updated for each WTRU according to the block error rate (BLER) or bit error rate (BER) for each Radio Resource Control (RRC) connection at a frequency of between 10 Hz and 100 Hz. Downlink outer loop power control enables the WTRU receiver to converge to required link quality (BLER) set by the network (RNC) in the downlink.

In inner loop power control, also called fast closed loop power control, which occurs between the WTRU and Node B, each WTRU compensates for short term channel variations. It is updated at 1500 Hz. In the uplink, the WTRU transmitter adjusts its output power in accordance with one or more TPC commands received on a downlink signal from the base station, to keep the received uplink SIR at a desired SIR target.

In uplink Universal Mobile Telecommunications System (UMTS) Long Term Evolution (LTE), power control is a combination of a basic open loop TPC, a dynamic closed loop TPC, and a bandwidth factor compensation component. The effective transmit power is

$$\text{Tx power} = P\_0 + alpha \times PL + delta\_TF + f(delta\_TPC) + 10log10(M)$$

As LTE uses Single-Carrier Frequency Division Multiple Access (SC-FDMA) in the uplink, the need for tight power control is not as important as in WCDMA/HSPA.

The basic open loop TPC implements fractional power control in which the WTRU compensates for a fraction of the path loss experienced

$$\text{Tx\_power} = P\_0 + alpha \times PL;$$

where alpha is the fractional path loss compensation parameter. The parameter P_0 is a WTRU-specific offset component that enables the evolved Node B (eNodeB) to correct for systematic offsets in the WTRU's transmit power. The PL parameter is the WTRU's estimate of the path loss derived from the Received Signal Received Power (RSRP) and the eNodeB transmit power while alpha, the fractional path loss compensation factor, trades off fairness for cell capacity. Alpha is usually set between 0.7 and 0.8 and reduces the effect of the cell edge transmissions, thereby increasing system capacity while minimizing the impact on cell edge performance. It is used on the Physical Uplink Shared Channel (PUSCH) only. The Physical Uplink Control Channel (PUCCH) sets alpha = 1 and has a different value of P_0.

Closed loop power control is dynamic and performs a mixture of interference control with channel condition adaptation. It consists of the terms

$$delta\_TF + f(delta\_TPC).$$

The parameter delta_TF is a modulation and coding set (MCS) dependent parameter that is based on the Shannon Capacity theorem. The WTRU specific parameter, f(delta_TPC), is similar to the closed loop TPC term in WCDMA/HSPA and instructs the WTRU to increase or decrease its power based on the power received at the eNodeB.

The bandwidth factor is a factor 10log10(M) that scales the transmit power based on number of resource blocks (RBs), or more generally resources, which are actually scheduled.

The TPC requirements for WLANs may be different from cellular for the following reasons. Unlike in CDMA, where both WTRUs close to the base station (BTA), and far away from the BTA, are transmitting simultaneously which creates a near-far problem. With WLANs, since it is a time domain system, there is only one STA transmitting within a BSS at a time. As such, tight closed loop power control may not be essential when the near-far problem is the only consideration.

Unlike LTE, where there is a central scheduler controlling the multiple access algorithm, the primary multiple access algorithm in an 802.11 WLAN system is distributed (in the Distributed Coordination Function (DCF) or Enhanced Distribution Channel Access (EDCA) multiple access method). As such, the need to trade-off the fairness of the uplink scheduling of cell edge WTRUs against total cell capacity is not as high and explicit fractional path loss compensation may not be as important. In addition, Orthogonal Frequency Domain Multiple Access (OFDMA) is not supported, and each STA/AP occupies the entire bandwidth. As such, there is no need for a bandwidth factor.

The 802.11 specifications emphasize simplicity for TPC. Typically TPC has been an implementation issue in 802.11 considers product and regulatory requirements. These reasons result in WLAN systems specifying different TPC procedures, relative to the cellular-based TPC procedures described above. Current TPC procedures in the 802.11 WLAN specifications support the following: association of STAs with an AP in a BSS based on the STAs' power capability; peering of mesh STAs based on the mesh STAs' power capability; specification of regulatory, and local, maximum transmit power levels for the current channel; selection of a transmit power for each transmission in a channel within constraints imposed by regulatory and local requirements; adaptation of transmit power based on a several information elements (IEs) including path loss and link margin estimates.

A directional multi-gigabit WLAN transmission is defined herein as WLAN transmission that is specified by IEEE 802.11ad using directional millimeter wave (mmW) transmission. WLAN transmission governed by all other specifications (such as IEEE 802.11-2012, IEEE 802.11n, IEEE 802.11ac, IEEE 802.11af, and IEEE 802.11ah) is defined as a non-directional 802.11 WLAN transmission.

In a non-directional 802.11 WLAN transmission, the receiving STA sends out a TPC Report element that includes the transmit power and link margin (the ratio of the received power to that required by the STA to close the link). The transmitter uses the information received in the TPC Report to decide on the transmit power. The STA may use any criteria to dynamically adapt the transmit power to another STA based on information it receives via feedback from STAs. Specific methods may be implementation dependent. This may be described as an open loop TPC. Open loop TPC implies the AP, or non-STA, transmitter may determine its transmit power independent of the STA's procedures.

A TPC report may be solicited by the receiver in which an explicit TPC Request Frame may be sent by the transmitter. Alternatively, a TPC Report may be unsolicited, for example, an AP in a BSS or a STA in an IBSS.

Using directional multi-gigabit 802.11 WLAN transmission modes (for example, 802.11ad), the Directional Multi-Gigabit (DMG) Link Margin element contains a field that recommends an increase or a decrease in transmit power. In this case, the transmitter sends a DMG Link Adaptation acknowledgement to indicate whether it will implement the recommendation or not.

In 802.11 WLANs, there may be different transmit power requirements for different transmission modes, or channel conditions. For example, TPC may be optimized separately for P2P transmission between two AP/STAs, and/or for network coverage (between an AP/STA and all the elements (STAs/APs) in the network). With proper network coverage, the transmit power level allows all STAs/APs in the network to successfully decode transmitted information. This information may be transmitted at the lowest possible data rate for the channel conditions. The TPC that is optimized for P2P transmission adjusts the power level of STAs in the network during data transmission to minimize the power expenditure or energy consumption and improve battery life. TPC optimized for coverage adjusts the power of the transmission to cover all the nodes in the network (network or BSS edge and non-edge) to ensure control frames such as the request to send (RTS) frames and the clear to send (CTS) frames may be decoded by all the elements in the network. In another example, as in 802.11ad the preferred transmit power required during quasi-omni directional beamforming to all STAs may be different from that preferred for directed beamforming to one of more STAs.

In some cases, the TPC requirements may be addressed at separate times with a single TPC loop. However, there are cases where multiple TPC requirements may need to be addressed either simultaneously or in such a manner that it may not be possible to have a single TPC loop. For example, consider a transmit-receive sequence of frames between a STA and an AP as follows:

RTS (Request to Send) - CTS (Clear to Send) - Preamble + SIG (Signal Field) + DATA (Data Fields) - ACK (Data Acknowledgement)

The RTS and CTS in the above sequence may desire the TPC optimized for network coverage, while the Preamble + SIG + DATA and ACK in the above sequence may desire the TPC optimized for STA/AP-to-STA or P2P connectivity. The SIFS interframe spacing between the two sessions may indicate that there may not be enough time to reset the TPC loop to the P2P TPC parameters. These issues may apply to both Very High Spectral Efficient, Very Large Number of Devices, Carrier Grade WLAN (CGWLAN), High Efficiency WLAN (HEW), and/or similar sub-6GHz WLAN systems.

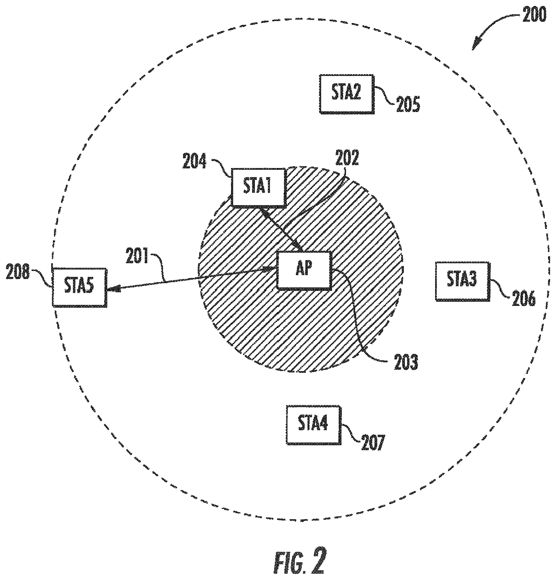

FIG. 2 shows an example system in which different power control loops may be set up in a WLAN network in accordance with a first embodiment 200, which may be used in accordance with any of the other embodiments described herein. In this embodiment, separate power control loops for communication to an entire WLAN network (network level power control) and for P2P WLAN transmission (P2P level power control) may be used. AP 203 may set one power loop 201 to control the power needed for network coverage including transmission of management frames, action frames, and control frames such as RTS, CTS, and PS-Poll to each STA in the network: STA1 204, STA2 205, STA3 206, STA4 207, and STA5 208. AP 203 may set a second power loop 202 to control the power for P2P transmissions between two STAs including transmission of data frames and control frames, such as the ACK, BAR, BA to STA1 204.

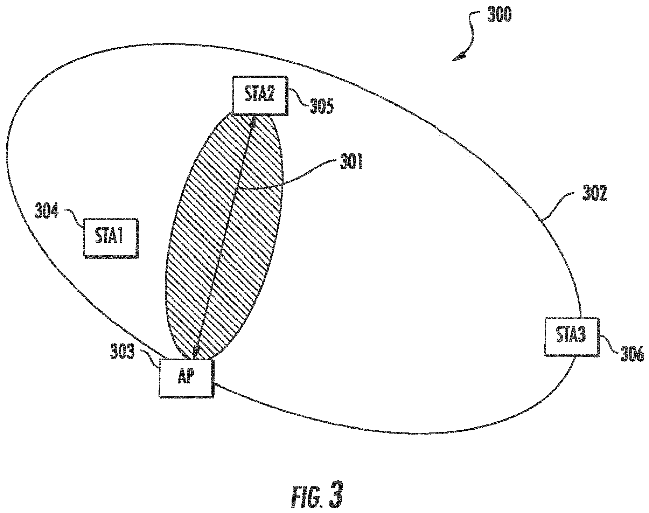

FIG. 3 shows an example in which separate power control loops for directional or sector based WLAN communication and for omni-directional WLAN communication may be used 300 in accordance with another aspect of this embodiment. AP 303 may use a two-level power control scenario in which a first power control loop 301 is for directional transmissions between AP 301 and STA2 305. AP 303 may set a second power control loop 302 to be used for omni-directional or quasi-omni-directional transmissions to each STA in the network: STA1 304, STA2 305, and STA3 306. In addition to sub-6GHz WLAN systems, this embodiment may be applied to millimeter wave (mmW) systems such as next generation mmW WLAB systems (e.g. future versions of IEEE 802.11ad).

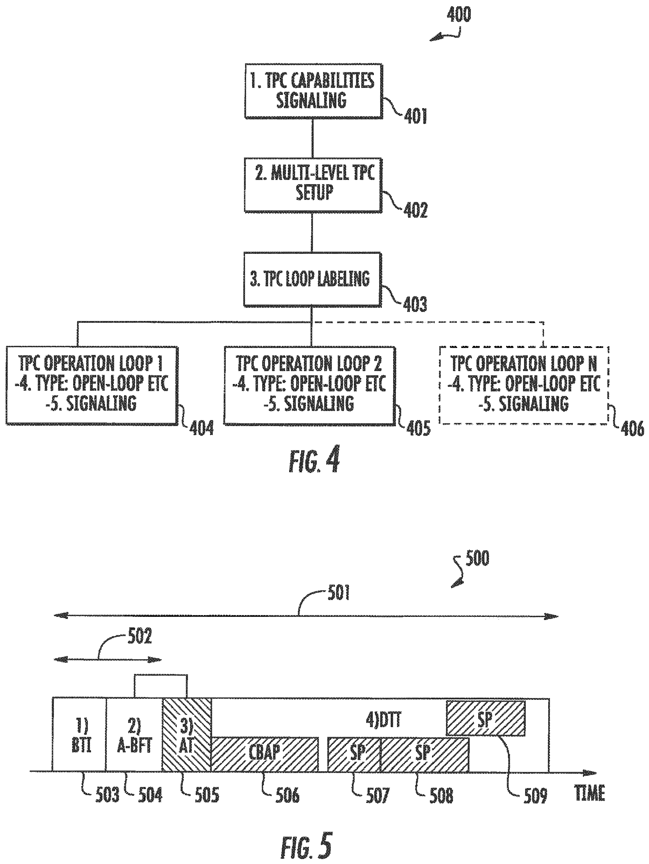

FIG. 4 provides a flow chart of an example procedure to enable network/P2P multi-level power control or directional/quasi-omni multi-level power control 400 as described in the examples above. This procedure may be suitable for both non-directional and directional multi-gigabit transmissions. The AP first performs TPC capabilities signaling 401 to the STAs. The AP and STAs may then perform a multi-level TPC set up 402 to set up a TPC loop using an exchange format between the AP and STA. The TPC loop labeling 403 may then be performed to enable proper identification of each unique TPC loop. A specific TPC adjustment procedure may then be carried out between the AP and the STA for each loop to determine the type of operation to be used Then multi-level signaling may be used by the AP and/or STA for each unique TPC loop 404, 405, and 406 defined based on this procedure.

The indication of TPC capabilities signaling as described above may be signaled either from the AP to the STA, or from the STA to the AP. This may be inclusively referred to as the "network." As a first step, the network may set up multiple TPC loops by signaling the number of power control loops that may be used in the network. This may be signaled in a modified power capability element or an extended capabilities element. This capabilities element as described below may be modified to include flags indicating that multi-level TPC is enabled and/or supported.

When performing multi-level TPC setup, the AP and STA may negotiate the frame-types that belong to each unique TPC loop.

In a first method, the frames transmitted in each TPC loop may be pre-determined. In a network and P2P transmission scenario, it may be predetermined that there are two TPC loops, a first for network transmission and a second for P2P transmission. The network transmission TPC may be used to ensure that all frames transmitted by a STA or by the AP and need to be overheard by all STAs in the network are set at the optimal power to do so. Examples of such frames include but are not limited to the RTS and CTS for CSMA/CA and the beacon frame for network information from the AP. The P2P TPC may be used to ensure that the frames such as the data frames that are earmarked for information transfer between two specific devices only are sent at the optimal power to do so. This embodiment may be extended to two or more TPC loops.

In directional and omni-directional transmission scenarios, it may be predetermined that there are two TPC loops, a TPC for quasi-omni-directional transmission and a TPC for directional transmission. In 802.11ad, a network architecture called a Personal Basic Service Set (PBSS) may be created where a STA may assume an AP-like role as a PBSS Central Point (PCP). The PCP transmits beacon frames that may be overheard by all STAs in the PBSS. This embodiment may be extended to two or more TPC loops.

FIG. 5 shows an example beacon interval structure 500. During a beacon interval 501, the PCP may transmit beacons during a beacon transmission interval (BTI) 503 in multiple directions to discover new STAs. The quasi-omni-directional transmission TPC may govern this period 502. Quasi-omni-directional transmission TPC may also govern the association beamforming training (A-BFT) period 504 in which beamforming between the AP/PCP and STAs may occur. The directional transmission TPC may govern additional periods such as the announcement time 505, in which association and scheduling may be performed, and during data transfer time. The data transfer time may include a contention based access period (CBAP) 506 and service periods (SPs) 507, 508, and 509.

In a second method, an information element (IE) may be created with a field that describes the number of levels (the number of TPC loop indices available) and pairs of fields that describe the specific frame type(s) and the associated TPC loop index (e.g., data transmission, ACK, RTS, CTS). The frame type may be a specific class or type of frames. This IE may be transmitted over the beacon to ensure that the entire network is aware of the TPC loops that are active.

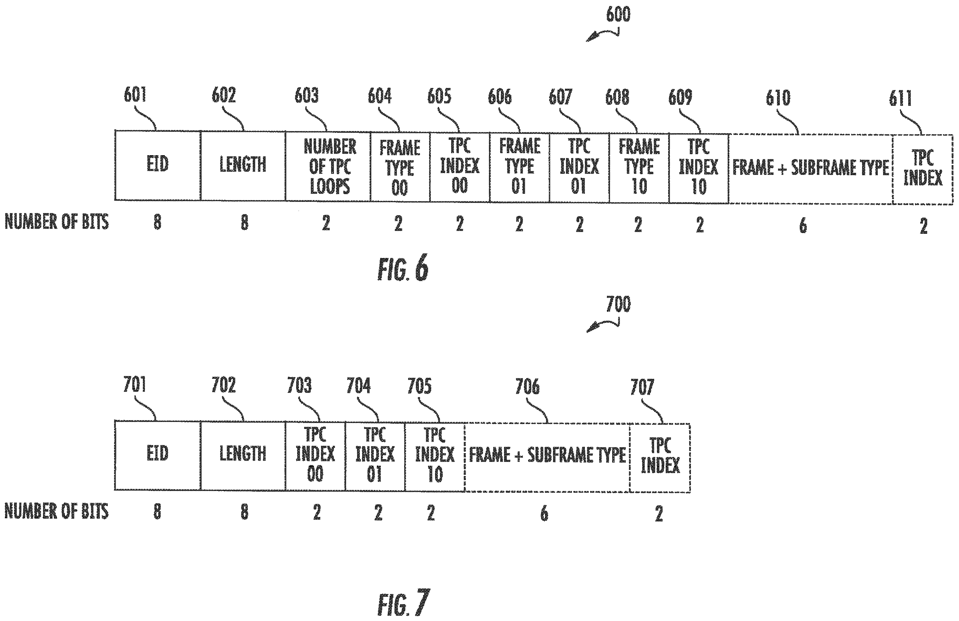

FIG. 6 shows an example TPC IE using explicit frame type and subtype signaling with each frame type explicitly listed with its associated TPC loop index 600. The TPC IE shown in the example of FIG. 6 includes but is not limited to the following fields: an element ID field 601, length field 602, number of TPC loops field 603, frame type field 604, TPC loop index field 605, frame type field 606, TPC loop index field 607, frame type field 608, TPC loop index field 609, frame and subframe type field 610, and TPC loop index 611.

As shown in FIG. 6, in the network and P2P transmissions, the multi-level TPC method may use the frame type and subtype fields that may be found in the frame control field to identify the function of the frame. In the frame control field, the two bits [b3 b2] identify the frame type as management (00), control (01), data (10), or reserved (11). Four bits [b7 b6 b5 b4] may indicate the subtype value within the frame type. In a general case, a number of TPC loops field may indicate the number of TPC loops available. Multiple 2-bit (using only the frame type description) or 6-bit (using a combination of frame type and sub-type) frame IDs may be transmitted with their associated TPC loop index IDs. Frame subtypes that are not specified may default to their type description level. For example, management frames (00) may be assigned to TPC loop 1, while a probe request (00;0100), which is a specific management frame may be explicitly assigned to TPC loop 2. If a Re-association request frame (00;0011) is transmitted, it defaults to TPC loop 1.

FIG. 7 shows an example TPC IE with implicit frame type and subtype signaling 700. The example in FIG. 7 lists the frame type and associated TPC index and includes but is not limited to the following fields: an element ID field 701, length field 702, TPC loop index field 703, TPC loop index field 704, TPC loop index field 705, frame and subframe type field 706, and TPC loop index 707.

In the directional and omni-directional transmission scenarios, the multi-level TPC method may use the type and sub-type fields that may be found in the frame control field to identify the function of the frame. In the frame control field, the two bits [b3 b2] may identify the frame type as above but with the bits set at (11) equivalent to the DMG beacon and the subtype bits for the type control (01) extended to allow more DMG subtype frames. The TPC IEs defined above may be used with these frame types.

TPC loop labeling may be performed as described above for a transmitted TPC signal to specify the intended STA/AP and the intended TPC loop. In a multi-level TPC network, the TPC loop ID may be one of the following:

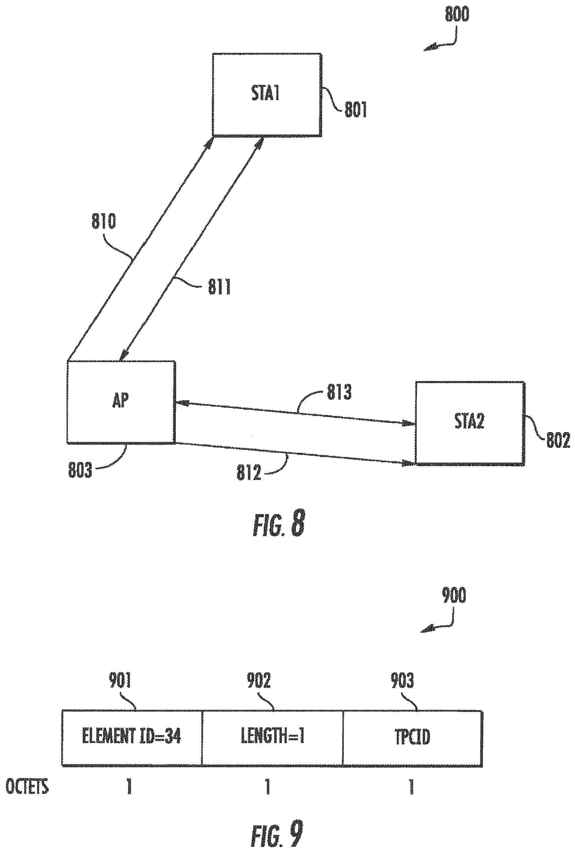

(1) FIG. 8 shows the network and P2P transmission scenario, in which each STA may create a unique TPC ID based on a combination of the STA ID and the TPC ID 800. For example, as shown in Figure 8, in a network of N STAs (in this case N=2 with STA1 801 and STA2 802) with M = 2 TPC loops, there may be N+1 unique TPC IDs with BRCST0:ID0 set to the TPC network-level TPC ID on 810 and 812. Accordingly, BRCST0:ID0 810 and 812 may be the broadcast ID used by AP 803. STA1:ID1 on 811 and STA2:ID1 on 813 may be set as the P2P TPC IDs. Additional STAs may be labeled using the same method, e.g. STAN:ID1

(2) In the directional and omni-directional transmission scenarios, in a network of N STAs with M directions or sectors, there may be N unique directional TPC IDs, each with M unique quasi-Omni TPC IDs. Signaling may be of the form STA1:ID1,...,STA1,IDM, STA2:ID1,...,ST2:IDM,...,STAN,ID1, STAN,IDM. Note that when the TPC is performed after the beam direction has been decided (i.e., M_eff = 1) the labeling above may be used.

TPC operation types may be performed as described above. The power control loops may include but are not limited to open loop TPC, slow closed loop TPC, fast closed loop TPC, or periodic closed loop. These methods may be suitable for both directional and non-directional transmission.

For P2P TPC, the control loop may occur between the two STAs or AP/STAs associated with the loop. For network level TPC, the TPC method used may depend on the WLAN architecture, i.e., infrastructure vs. independent networks.

For infrastructure based networks, the network transmission power may be communicated to all the STAs in the network by the beacon of the AP and may be negotiated with the cell-edge STAs (or the worst-case coverage STAs) to ensure full network coverage.

For independent networks, a TPC AP or a "cluster head" may be designated. This TPC AP may perform the same function as the AP in an infrastructure based network. Selection of the TPC AP may be by a discovery protocol for a central node, which may be for example an AP with minimum {(max (P2P power))} or a random selection based on existing standard.

TPC operation signaling may be performed as described above. The TPC signaling may be modified to account for the TPC loop. Examples include the following.

FIG. 9 provides an example TPC request element that may be used in the signaling as described above. The TPC request element may include but is not limited to an element ID field 901, length field 902, and TPCID 903. As shown in FIG. 9, the TPC request element may be modified to include the TPC ID of the TPC loop.

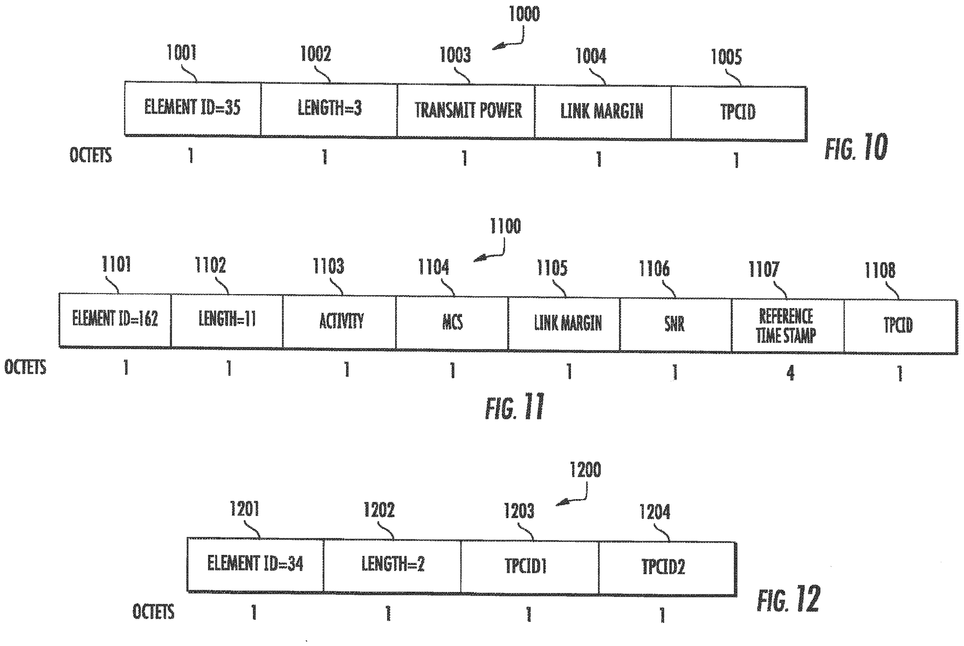

FIG. 10 provides an example TPC report element that may be used in the signaling as described above 1000. The TPC report element may include but is not limited to an element field 1001, length field 1002, transmit power field 1003, link margin field 1004, TPCID field 1005. As shown in FIG. 10, the TPC report element may be modified to include the TPC ID of the TPC loop.

FIG. 11 provides an example DMG link margin element that may be used in the signaling as described above 1100. The DMG link margin element may include but is not limited to an element field 1101, length field 1102, activity field 1103, MCS field 1104, link margin field 1105, signal-to-noise ratio (SNR) field 1106, reference time stamp field 1107, and TPCID field 1108. The DMG link margin element may be modified to include the TPC ID of the TPC loop as shown in FIG. 11.

FIG. 12 shows an example of how any of the above elements may be modified to include requests/reports of multiple TPC loops 1200. The example of FIG. 12 may include but is not limited to an element field 1201, length field 1202, and TPCID fields, TPCID1 1203 and TPCID2 1204.

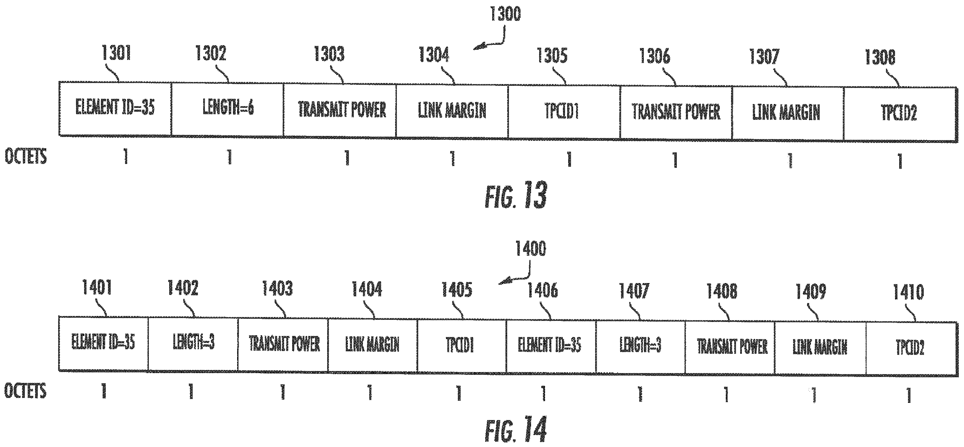

FIG. 13 provides a second example of how any of the above elements may be modified to include requests/reports of multiple TPC loops 1300. The example of FIG. 13 may include but is not limited to an element field 1301, length field 1302, transmit power field 1303, link margin field 1304, TPCID1 1305, transmit power field 1306, link margin field 1307, and TPCID2 1308.

FIG. 14 provides an alternative example in which separate elements may be aggregated in one frame 1400. The example of FIG. 14 may include but is not limited to an element field 1401, length field 1402, transmit power field 1403, link margin field 1404, TPCID1 1405, element field 1406, length field 1407, transmit power field 1408, link margin field 1409, and TPCID2 1410.

The signaling described above may also be used in procedures for simultaneous separate WLAN power control loops in a transmission between an AP and STA, either in a downlink or uplink scenario, in accordance with another aspect of this embodiment.

Prior to proceeding with a power control procedure, both the AP and the STA's TPC capabilities may be checked using the TPC capabilities signaling described above. If the AP and/or the STA either do not support multiple power control loops, or are otherwise instructed not to use multiple power control loops, the remainder of this procedure may be skipped and packet transmission may follow the specification for legacy operation, e.g., 802.11ac or 802.11ah. If the use of multiple power control loops is indicated, the specific type of power control to be used may be specified by and checked using the signaling field(s) defined above.

The AP and the STA may then configure their transceivers for the indicated power control mode. The STA may configure the initial reference receive power for a first TPC, TPC0, and a second TPC, TPC1, wherein the reference power may be pre-determined, or the reference power for TPC1 may be relative to that set for TPC0. The STA and AP may then configure each TPC loop independently, identifying the frame types/subtypes or time periods governed by each loop and configuring a unique identifying label for each independent loop. On successful setup of the loop(s), a loop setup acknowledgement frame may be sent by the STAs or APs. Within each loop, the specific type of power control may then be performed (e.g., open loop or closed loop TPC) with appropriate modifications to the signaling as needed.

If the signaling indicates that a direction, and/or omni-directional transmission mode may be used, the STA may configure its receiver for the appropriate initial reference power for TPC0 omni-directional transmission mode, and TPC1 for directional transmission mode. Omni-directional mode with TPC0 may be used for transmission of the DMG beacon and may be used in the association beamforming training period. The STA and AP may then configure each TPC loop independently, identifying the time periods governed by each loop and configuring a unique identifying label for each independent loop. TPC0 and TPC1 may then be operated independently based on the transmission period in the beacon interval.

As described above, independent TPC control loops in different network conditions may be used. For each independent power level controlled by a separate TPC loop, the input to the TPC loop at the transmitter may be influenced by the receiver. This influence may be information from the receiver to enable the transmitter to implicitly decide on its transmit power (open loop power control), or an explicit recommendation from the receiver to the transmitter to modify its transmit power (closed loop power control). In 802.11 WLANs, existing TPC methods include entirely open loop power control for non-directional transmissions or closed loop power control with a specific handshake method for directional multi-gigabit transmission in 802.11ad. TPC using physical (PHY) layer signaling is enabled by a second embodiment, which may be used with the other embodiments described herein to enable TPC loop transmit power levels on the PHY layer. This embodiment may permit modification of the transmit power over a desired duration or may enable periodic transmit power recommendations with minimal overhead.

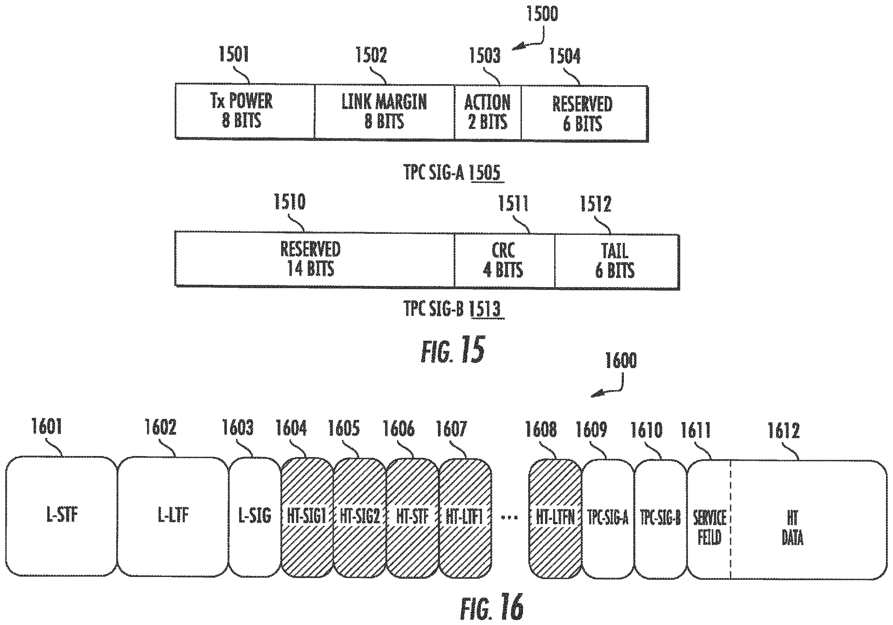

FIG. 15 shows an example design for a TPC Signal (SIG) for PHY layer TPC 1500 in accordance with the second embodiment. The TPC SIG may enable transmit power control on the physical layer from an AP to a STA (in the case of a downlink transmission), for a STA to an AP (in the case of an uplink transmission), or from a STA to a STA (in the case of transmission in an independent BSS). The use of PHY layer signaling may allow for a timely response by the transmitter to the TPC recommendation from the receiver, since MAC level signaling requires the entire data packet to be decoded. In scenarios where the TPC SIG is used, TPC (open loop with no action or closed loop with an action/recommendation) may be implemented at the PHY layer using IEs available in the PHY layer preamble of any transmitted frame. The transmitter may be the AP (in the case of downlink transmission) or the STA (in the case of uplink transmission). In the example of FIG. 15, the TPC SIG may consist of two OFDM symbols TPC SIG-A 1505 and TPC SIG-B 1513, made up of a total of 48 information bits. TPC SIG-A 1505 and TPC SIG-B 1513 may be transmitted using BPSK modulation and a rate ½ binary convolutional code. TPC SIG-A 1505 may include but is not limited to the following fields Tx power field 1501, link margin field 1502, action field 1503, and reserved field 1504. TPC SIG-B 1513 may include but is not limited to the following fields reserved field 1510, CRC bits field 1511, and tail bits field 1512. Other bitwidths may also be used in this embodiment. The definition of each field from TPC SIG-A and TPC SIG-B is shown below in Table 1:

Table 1: TPC SIG Fields with Two OFDM Symbols

| Bits | Bit size | Function | Comments |
|---|---|---|---|
| B0:B7 | 8 | STA Transmit power | An absolute or relative dBm value from -127 to + 128 dBm written in 2's complement. Absolute Value: Indicated transmit power utilized in open loop TPC. Relative Value: Indicates power increment/decrement power in closed loop TPC. |
| B8:B16 | 8 | STA Link Margin | An absolute or relative dBm value from -127 to + 128 dBm written in 2's complement. Enables open loop TPC similar to TPC response element. |
| B17:B18 | 2 | Action: Power Change | Action value that enables closed loop power control. The bits B0:B7 indicate the power increment/decrement value to use. No effect (00); Increase power (01); decrease power (10); keep power same (11). |
| B19:B37 | 20 | Reserved | |
| B38:B41 | 4 | CRC | Protects bits 0~23 of TPCSIGA and bits 0~13 of TPCSIGB. |
| B42:B47 | 6 | Tail Bits | Tail bits for the rate ½ binary convolution code. |

In a variation of the above TPC SIG definition, the CRC field may be increased to 8-bits to enable re-use of hardware used in the HT-SIG.

If overhead is an issue, the size of the different fields of the TPC-SIG may be adjusted and the CRC size changed to reduce the TPC SIG to a single OFDM symbol. For example, the number of bits dedicated to the transmit power and link margin fields may be reduced as shown in Table 2 below. Note that this may reduce the quantization of the TPC parameters and as such the precision of the TPC algorithms.

Table 2: TPC SIG Fields with One OFDM Symbol

| Bits | Bit size | Function | Comments |
|---|---|---|---|
| BO:B3 | 4 | STA Transmit power | An absolute or relative dBm value from -127 to + 128 dBm with the appropriate 4 bit quantization: Absolute Value: Indicated transmit power utilized in open loop TPC. Relative Value: Indicates power increment/decrement power in closed loop TPC. |
| B4:B7 | 4 | STA Link Margin | An absolute or relative dBm value from -127 to + 128 dBm with the appropriate 4-bit quantization: Enables open loop TPC similar to the TPC response element. |
| B17:B18 | 2 | Action: Power Change | Action value that enables closed loop power control. The bits B0:B3 indicate the power increment/decrement value to use. No effect (00); Increase power (01); decrease power (10); keep power same (11). |
| B19:B37 | 4 | Reserved | |
| B38:B41 | 4 | CRC | Protects bits 0 to 13 of the TPC SIG |
| B42:B47 | 6 | Tail Bits | Tail bits for the rate ½ binary convolution code |

The TPC SIG may be placed directly after the Legacy and V(HT) SIG fields in a data frame. FIG. 16 shows an example placement of the TPC SIG in a HT network 1600. In the example of FIG. 16, TPC SIG-A 1609 and TPC SIG-B 1610 may be placed after an L-STF 1601, L-LTF 1602, L-SIG 1603, HT-SIG1 1604, HT-SIG2 1605, HT-STF 1606, and HT-LTF1 1607 to HT-LTFn 1608. TPC SIG-A 1609 and TPC SIG-B 1610 may be placed before a service field 1611 and the HT data 1612.

In a similar fashion as above the TPC SIG may be included in the definition of a HEW frame. For example the TPC SIG field may follow a HT-SIG field prior to a HEW preamble. Hereinafter references to the legacy SIG may also be applicable to other definitions of the SIG field.

To enable differentiation between packets that support the TPC-SIG, explicit signaling or a robust auto-detection procedure may be used.

With explicit signaling, a TPC-SIG present flag may be added to the legacy SIG to indicate the presence of a TPC-SIG signal. To enable robust auto-detection, the TPC SIG BPSK signals may be rotated by an angle (beta) not equal to zero or ninety degrees to differentiate them from the Legacy Signal (L-SIG) with angle = 0, the (Very) High Throughput Signal ((V)HT-SIG) with angle = 90 degrees and the new TPC-SIG. Alternatively or additionally, pilot based auto-detection may be used in which the polarity of the pilot is used to signal the presence of a TPC-SIG. Other auto-detection methodologies may be used.

A procedure for PHY-layer TPC, in which a STA receives a transmission from an AP and recommends a change in transmission power at the AP, is described below that leverages the signaling capabilities described above in the transmission of data from an AP to a STA. This PHY-layer TPC procedure may also be extended to the case of transmission from a STA to an AP or from a STA to a peer STA in an independent BSS.

Prior to proceeding with the power control procedure, the STA's TPC capabilities may need to be checked using the TPC capabilities signaling in a manner similar to that described above with respect to the first embodiment. However, this TPC capabilities checking step may be modified to incorporate messaging for PHY-layer TPC. If the STA either does not support the feature, or is otherwise instructed not to use feature, the remainder of this procedure may be skipped and packet transmission may follow the specification for a legacy operation, e.g., 802.11ac or 802.11ah.

In the procedure for PHY-layer TPC the transmitting AP may send a TPC request frame, and the STA may reply with a recommendation frame including TPC SIG. Alternatively, the recommendation from the STA may be unsolicited. For open loop TPC, the TPC SIG from the STA may include the transmit power used in the frame and the estimated link margin based on previous transmissions. The TPC SIG may be transmitted in the preamble as described above. The packet containing the preamble may be any transmitted packet from the STA to the AP. For example, it may include but is not limited to one of the following: a null-data packet, a packet sent to the AP in response to a previous transmission (such as a data ACK), or a packet containing data from the STA to the AP. Upon receiving the TPC SIG from the STA, the AP may use the path loss and the link margin estimates to dynamically adapt the transmit power used to send subsequent packets to the STA. These estimates may be inferred from measurements, or explicitly signaled. Alternatively, for closed loop TPC, the TPC SIG from the STA may include a recommendation to the AP to increase, decrease, or maintain the transmit power used. The amount by which the power is changed may also be placed in the TPC SIG. Upon receiving the TPC SIG from the STA, the transmitting AP may modify its transmit power in the requested manner.

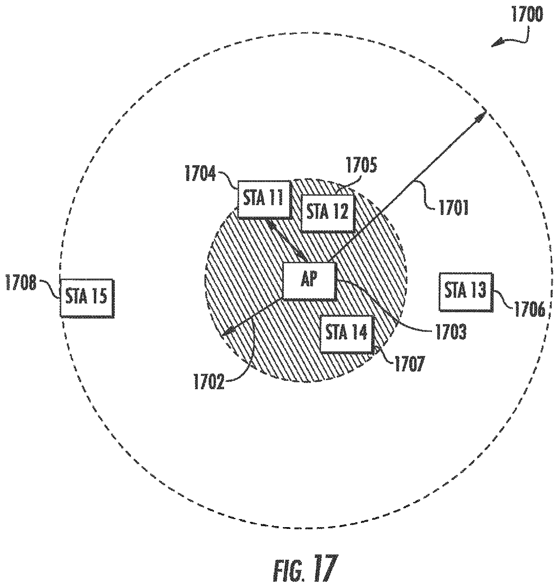

FIG. 17 shows an example system setting optimal P2P transmit power and using associated messaging for a partially compensated open loop power control 1700 in accordance with another aspect of this embodiment. For 802.11 WLAN specifications which utilize non-directional transmission modes, a modified link margin response frame may be used to indicate the response of the receiver (the STA in the case of an AP to STA transmission) to the TPC signaling during the procedure.

In traditional open loop power control, the transmitter decides its transmit power level based on some metric, e.g., the path loss between the transmitter and receiver in cellular systems or the nominal transmit power subject to regulatory limits in 802.11 WLANs. This is applicable to downlink transmission from the AP to the STA in infrastructure networks (in which case the transmitter is the AP), to uplink transmission from the STA to the AP in infrastructure networks (in which case the transmitter is the STA) and to P2P transmission from STA to STA in an independent network (in which case the first STA is the transmitter). In this embodiment, partially compensated open loop power control scales the traditional open loop power control transmit power by a desired scaling factor (alpha). This may enable a STA or group of STAs to transmit at a lower power to the AP and vice versa, effectively shrinking the coverage of the BSS for a desired period of time. This may also enable power control in dense networks for interference mitigation. In the example of FIG. 17, STA 11 1704, STA 12 1705, and STA 14 1707 may be covered effectively with a transmit power of alpha*P 1702, while STA 15 1708 and STA 13 1706 may be covered with the nominal transmit power of P 1701. In a dense network with multiple APs relatively close to each other, the BSS coverage area of adjacent cells may be adjusted in a coordinated manner to improve the overall performance of the network.

Signaling and associated procedures enable the change in the power transmitted to a STA or to an AP (depending on if it is an infrastructure or independent network and if the transmission is in the uplink or downlink direction) for a desired duration. Using fractional power control, a STA may transmit at a predetermined fraction of its current transmit power (or nominal transmit power), for a predetermined period of time.

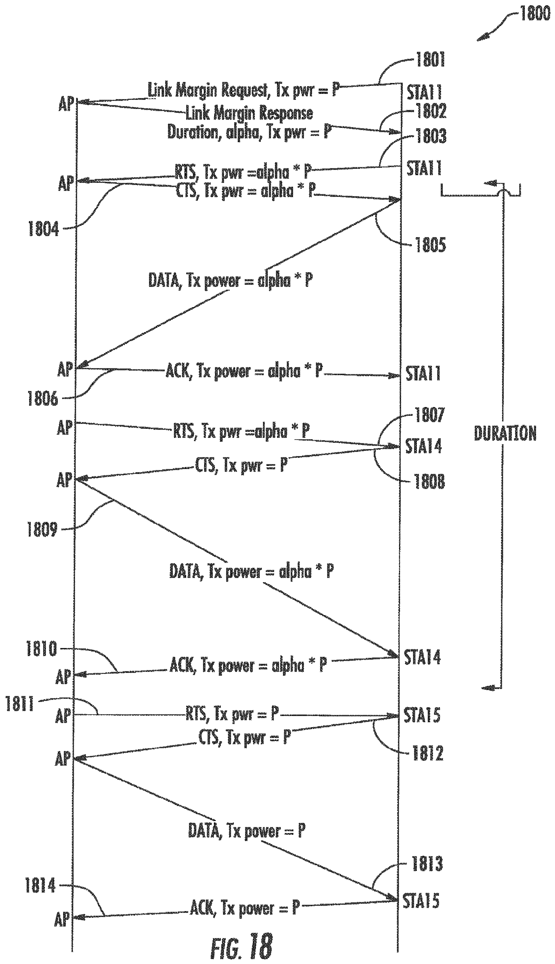

FIG. 18 provides an example of a procedure for MAC layer partially compensated open loop TPC for an infrastructure network such as the system described in FIG. 17. In this example, STA11, STA12, and STA14 may be transmitting in fractional TPC mode, while transmissions from STA12 and STA15 may be disabled for the duration. Note that all the packets transmitted during the time duration between STA11, STA14, and the AP are transmitted at the fractional power level. Prior to proceeding with the power control procedure of FIG. 18, the STAs' TPC capabilities may be checked using the TPC capabilities signaling in a manner similar to that described above with respect to the first embodiment. However, this TPC capabilities checking step may be modified to incorporate fractional open loop power control. If the STA either does not support the feature, or is otherwise instructed not to use feature, the remainder of this procedure may be skipped and packet transmission may follow the specification for a legacy operation, e.g., 802.11ac or 802.11ah.

The transmitting STA may send a link margin request 1801 to the STA/AP that will be receiving. This request may be for a single STA or for a group of STAs (STA11, STA12, and STA14), sent at normal power. The receiving STA (in this case the AP) may then transmit a link margin response frame 1802 in response to the transmitting STA. This may be in response to the link margin request or may be unsolicited. In addition, the response may be sent to more than one STA (STA11, STA12, and STA14) at normal power. The STAs outside the group (STA13 and STA15) may set their Network Allocation Vectors (NAV) to defer transmission for the duration. 802.11 WLAN transmission may then occur for the requested duration from the desired STAs. In this example, an RTS 1803, CTS 1804, DATA 1805, ACK 1806 transmit-receive sequence occurs between STA11 and the AP with uplink data transmission all at fractional power level scaling factor, alpha. Then a downlink data transmission RTS 1807, CTS 1808, DATA 1809, ACK 1810 transmit-receive sequence occurs from the AP to STA14 all at fractional power level scaling factor alpha. The duration may then expire, and then a RTS 1811, CTS 1812, DATA 1813, ACK 1814 transmit-receive sequence occurs between the AP and STA15 at the normal power level, P.

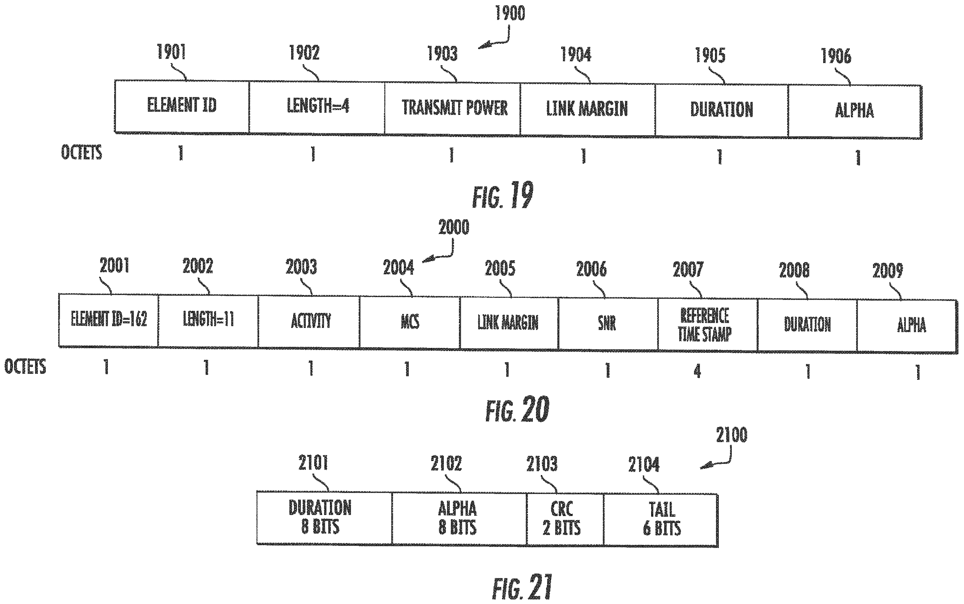

In this embodiment two elements may be added to the link margin response frame to enable a partially compensated open loop TPC. FIG. 19 shows an example link margin response frame 1900 in accordance with this embodiment. The link margin response frame may include but is not limited to an element ID field 1901, length field 1902, transmit power field 1903, link margin field 1904, duration field 1905, and alpha field 1906. The duration field 1905 element may specify how long partially compensated open loop TPC may be active. The duration may be set to a specific number of packets or may be set to a particular time interval, e.g., a TxOP interval or may be set over a number of TxOP intervals (in this case, the TPC duration may be interrupted by other transmissions). The partial compensation factor alpha may be indicated in the alpha field 1906. The values of the scaling may be predetermined in a table, with alpha indicating the index of the desired entry. Alternatively, it may be a fractional signed 2's complement representation of a decimal fraction. More than two elements may also be added to the link margin response frame in a similar functionality as described above.

FIG. 20 shows an example of the DMG link margin response frame in accordance with another aspect of this embodiment that may be used for example in the case of an Next Generation mmW WLAN or HEW network. DMG link margin response frame may include but is not limited to an element ID field 2001, length field 2002, activity field 2003, MCS field 2004, link margin field 2005, SNR field 2006, reference time stamp field 2007, duration field 2005, and alpha field 2006.

The length of the modified link margin response frame or DMG link margin response frame may implicitly signal the presence of the duration and alpha fields. Alternatively, the action field in the DMG link margin response frame may be modified. The action field in Table 3 below specifies a field in the reserved bits (bit 5), which may be used to indicate that a time limited response is required and the duration and alpha fields are to be processed in the DMG link margin response frame.

Table 3 : Proposed Action Values

| Preferred Action Value | Meaning |
| --- | --- |
| 0 | No Preference |
| 1 | Change MCS |
| 2 | Change Transmit Power |
| 3 | Fast Session Transfer (FST) |
| 4 | Power conserve mode |
| 5 | Time limited Response |
| 6-7 | Reserved |

In scenarios where a group of STAs change their operating set points, the duration and scaling may be sent to a group of STAs simultaneously. This may inform the selected STAs that for the time specified by the duration field, they may operate at a fraction of the nominal or operating transmit power specified by alpha. In the case of MAC messaging, an unsolicited transmit power response may be sent by a multicast transmission using a multi-cast group address. In the multi-cast method, the receiver address may be set to that of the group. A flag may be set to ensure that there may be no TPC ACK and no associated ACK management frame sent.

The action frame may be sent as an action that requires an explicit link margin acknowledgement or as an action that requires no acknowledgement from the STA on whether it performed the requested action or not.

In a variation of the embodiment above, a PHY-layer partially compensated open loop TPC scheme based on PHY layer signaling and group signaling may be used. This embodiment is applicable to downlink transmission from the AP to the STA in infrastructure networks (in which case the transmitter is the AP), to uplink transmission from the STA to the AP in infrastructure networks (in which case the transmitter is the STA), and to P2P transmission from STA to STA in an independent network (in which case the first STA is the transmitter). In this case, the scaling and the duration information may be placed in the PHY preamble as part of an extended TPC SIG field or IE in the SIG.

FIG. 21 provides an example of the extended TPC SIG 2100. As shown in FIG. 21, the extended TPC SIG may include a single OFDM symbol made up of 24 information bits and transmitted using BPSK modulation and a rate ½ binary convolutional code. The extended TPC SIG may include but is not limited to the following fields: a duration field 2101, alpha field 2102, CRC field 2103, and tail field 2104.

The extended TPC SIG sub-fields may consist of:

B0:B7 - duration of partial compensation
B8:B15 - partial compensation factor (alpha)
B16:B17 - CRC bits covering B0:B15
B18:B23 -Tail bits

The TPC SIG may be detected in a manner similar to the procedure described above with respect to the first embodiment.

To send information to a group of STAs simultaneously, a group identifier may be assigned to the STAs in the group. The group identifier may be assigned by any one of the following aspects of this embodiment:

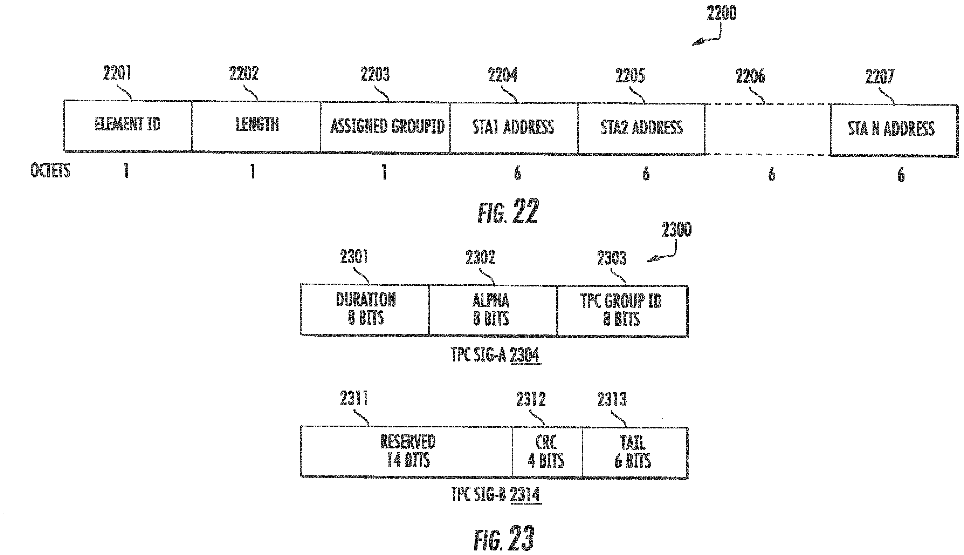

(1) FIG. 22 provides an example TPC group ID assignment frame that may be used for assigning a group identifier 2200. This MAC IE may be broadcast to all STAs indicating the STAs in the group. In this case, the MAC frame contains the TPC Group ID to be assigned then enumerates all the STAs assigned to the group. The TPC group ID assignment frame may include but is not limited to the following fields: an element ID field 2201, a length field 2202, an assigned group ID field 2203, a STA1 address field 2204, a STA2 address field 2205, and fields 2206 and 2207 for STAN addresses.

(2) Another method for assigning a group identifier may include re-using the group-ID management frame in 802.11ac for MU-MIMO, wherein a STA may be assigned to a group ID by using a MAC message. The group management frame may be used to assign the STA to one of 64 possible groups. The group ID may be signaled by the VHT-SIG-A in the PHY. This may include transmitting the VHT-SIG in addition to the TPC-SIG.

(3) Yet another approach is to use a spectrum management action frame. In this case, one of the reserved bits may be allocated to create the action frame for spectrum management. Eight TPC groups may be created with an associated membership status array field in the new frame. The frame may be transmitted to the STA with the membership status array field set to one corresponding to the TPC group for which the STA belongs. The frame may be structured as shown in Table 4 below:

Table 4: TPC Group ID Management Frame Action Field Format

| Order | Information | Comment |
| --- | --- | --- |
| Category | 0 | Spectrum Management |
| Spectrum Management Action Field Value | 5 | Use reserved bit for the new Group ID Management function |
| Membership Status Array Field | 1 Octet | Assumes a maximum of 8 groups with bit set to 0 if STA is not a member, or to 1 if STA is a member |

In the case of group-based TPC, the TPC-SIG described above may be increased to two symbols, TPC SIG-A and TPC SIG-B, and may be made up of two OFDM symbols consisting of 48 information bits and transmitted using BPSK modulation with a rate ½ binary convolutional code. FIG. 23 shows an example of the TPC SIG-A and TPC SIG B for partially compensated TPC with a group ID 2300. TPC SIG-A 2304 may include but is not limited to the following fields duration field 2301, alpha field 2302, and TPC group ID 2303. TPC SIG-B 2314 may include but is not limited to the following fields reserved field 2311, CRC bits field 2312, and tail bits field 2313.

The TPC SIG-A and TPC SIG B for partially compensated TPC with a group ID sub-fields consist of:

B0:B7 - duration of partial compensation
B8:B15 - partial compensation factor (alpha)
B16:B22 - Group ID that this signal applies to
B24:B37 - Reserved
B38:B41 - CRC bits covering B0:B37
B42:B47 -Tail bits

The signaling described above may be sued in a procedure for achieving PHY-layer partially compensated TPC. In one example procedure, the AP and a subset of the STAs associated with that AP transmit information at a fraction of the transmit power they use in normal transmission.

One example procedure is as follows:

The capabilities of the AP and the STAs in the network may be evaluated. Once the capabilities have been established, STA1 may send an RTS frame to the AP. At that point, there may be a request from the network to shrink the effective size of the BSS to a size that includes all STAs in a specific group, for example, Group 3. The AP may send a CTS to a first STA and append the extended TPC SIG to the preamble based on the description above with a frame structure as described above. All STAs in TPC example Group3 may then transmit with power alpha x P for the desired duration. In case a duration extension may be needed, a new TPC SIG may be piggybacked on a transmission from the AP.

To set up the group, the AP may follow a procedure as follows:

(1) The AP may send a TPC group ID assignment frame , with the group ID, followed by the STA addresses for all STAs assigned to the particular group (for example FIG. 22).
(2) If a particular STA is within the group set up by the AP, it may actively monitor the packets sent to this group from the AP, and decode and process the packets accordingly.
(3) If a particular STA is not within the group set up by the AP, it may ignore all packets sent to this group from the AP.
(4) If STA X joins the network and is to be assigned to the group, a spectrum management action frame may be sent from AP to STA X with the membership status Array field of the desired group set to one.

A closed-loop transmit power control method suitable for 802.11 WLANs, specifically VHSE, next generation sub-1GHz WLAN macro coverage, and Next Generation mmW WLAN systems, where the receiver (typically the AP) continually or periodically sends a recommendation or request to the transmitter to increase or decrease the transmitted power may be used in accordance with another aspect of this embodiment.

This embodiment may be applicable to downlink transmission from the AP to the STA in infrastructure networks (in which case the transmitter is the AP), to uplink transmission from the STA to the AP in infrastructure networks (in which case the transmitter is the STA), and to P2P transmission from STA to STA in an independent network (in which case the first STA is the transmitter). It may be used in an uplink scenario with transmission from STA to AP and control signals from AP to STA.

As this may be a departure from normal operation used in 802.11ac or 802.11ad, the closed loop TPC operation may be initiated using a procedure for a setup and acknowledgement. Non-directional transmission (i.e., non IEEE802.11ad transmissions) may use the addition of a modified link margin response frame similar to the DMG link margin frame element present in 802.11ad. Once the message has been acknowledged, the closed loop TPC procedure may commence.

The closed-loop transmit power control procedure may allow for tighter control of the transmit power by the receiver and may be used in a variety of scenarios where the relative power of multiple users may be important (for example, uplink MU-MIMO).

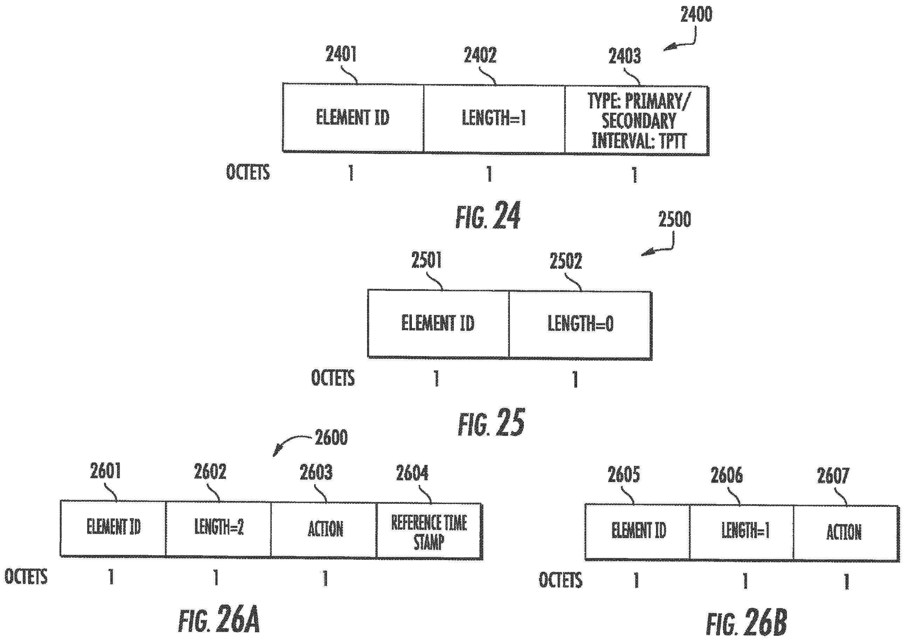

One example procedure is as follows: Closed Loop TPC (CL TPC) may be set up by either the transmitter or receiver sending a CL TPC request and a request for control of the loop (as primary in control of the loop or as secondary being controlled by the loop) and the target power control transmission time. FIG. 24 shows an example closed loop TPC request frame 2400. The closed loop TPC request frame may include but is not limited to an element ID 2401, length field 2402, and type and interval field 2403. A target power control transmission time (TPTT) interval may define the period of the closed loop TPC operation. In one method, the TPTT value may indicate an interval similar to the Target Beacon Transmit Time (TBTT) used to determine the periodicity of the beacon. In another method, the TPTT may indicate the periodicity of the TPC signal based on an integer number of TBTTs (in this case, the periodicity is tied to the TBTT interval). In both cases, a TPTT=0 implies a best effort transmission, for example, piggy backed onto a transmission from the receiver. If the receiver of the TPC request frame agrees to the CL TPC request, a response or acknowledgement frame, (CL TPC ACK) may be sent back to the requestor. FIG. 25 provides an example of a closed loop TPC response/ACK frame 2500. The closed loop TPC response/ACK frame may include but is not limited to the following: an element ID field 2501 and a length field 2502. In this procedure either the transmitter or receiver may initiate the CL TPC session.

The STA may transmit a link margin request frame to a (receiving) STA indicated in the RA field of the frame. The link request may include a flag to indicate the start of a continuous or periodic closed loop TPC. The link margin request frame may also include the CL_TPC_ACK, or a CL loop TPC duration field. Alternatively, the link margin request frame and the CL_TPC_ACK frames may be aggregated together.

The receiver may then send its recommendation to the transmitter. The timing of the message sent may be one of the following: at the TPTT interval; on demand, based on a request from the transmitter; at intervals dictated by reverse transmissions from the receiver to the transmitter, which may include data transmission and response frames such as ACKs, CTS, etc.; or at time intervals determined in an implementation specific manner by the receiver and unsolicited by the transmitter.

The information may be sent in a frame including but not limited to the following examples:

(1) A DMG link margin response frame or similar frame that transmits recommendations to the transmitter on the MAC may send the information.
(2) A short or truncated DMG link margin response frame (or similar) may send the information. A truncated link margin response is one which contains a subset of the elements in the link margin response e.g., action octet and reference stamp field or the action field only. FIG. 26A provides a first example of a truncated or a short link margin response frame 2600. The truncated or short link margin response frame may include but is not limited to the following: an element ID field 2601, length field 2602, action field 2603, and reference time stamp field 2604. FIG. 26B a second example of a truncated or a short link margin response frame that may include only an element ID field 2605, length field 2606, and action field 2607.
(3) A PHY-layer TPC SIG field with a sub-field allocated to sending TPC recommendations to the transmitter may send the information. In this case, the TPC SIG field described above may be used.

As such, the receiver may send its recommendation by any of the following methods: unsolicited short or normal link margin response frames sent at a target PC transmission time (TPTT) interval; short or normal link margin response frames sent in response to a link margin request initiated at a TPTT interval; or short or normal link margin response frames or a TPCSIGA header piggy-backed on any reverse transmission.

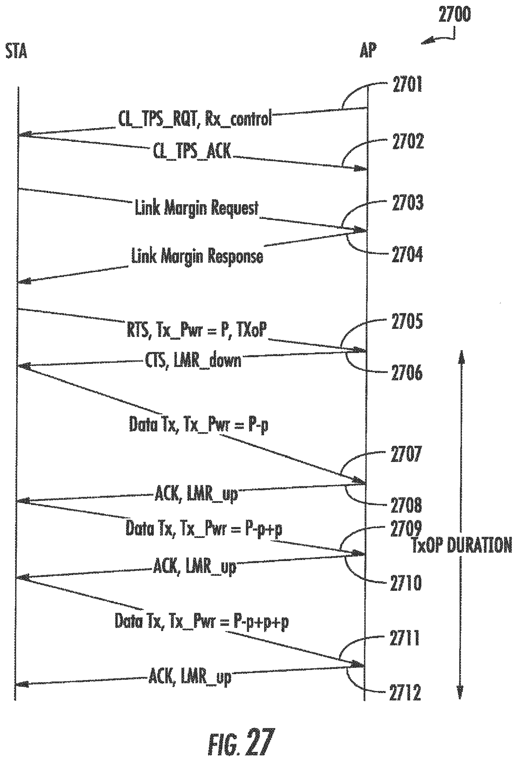

FIG. 27 provides an example procedure that uses the link margin action octet sent on the PHY header of the data ACK frame 2700. In this procedure, the AP performs closed loop uplink power control during uplink data transmission from the STA to the AP. The AP may send a CL-TPC request 2701 to the STA and request for TPC control of the loop. The STA may reply with a CL-TPC ACK 2702 to acknowledge the CL-TPC. The STA may send a link margin request frame 2703. The AP may reply with a link margin response frame 2704 to set the initial TPC level. The STA sends an RTS 2705 to reserve the medium for a transmit opportunity. The AP replies with a CTS 2076 to confirm reservation of the medium and complete reservation of the transmit opportunity. Actual data transmissions 2707, 2709, and 2711 may follow. The AP may send recommendations to increase or decrease the power, piggy backed on all response frames, i.e., CTS and ACKs 2708, 2710, and 2712.

Unlike cellular systems where the multiple access scheme depends entirely on the scheduler in the eNodeB and the TPC may be implemented independently from the multiple access scheme, the multiple access scheme in 802.11 WLANs interacts with the transmit power of the STAs. For example, use of a TPC loop optimized for P2P transmission between two STAs may impact the CSMA/CA multiple access methodology by increasing the number of hidden nodes.

Multiple power control levels in a transmit-receive WLAN session (power control regions) may be used in accordance with a third embodiment. This embodiment addresses the issue related to TPC interacting with the multiple access methods in WLANs and may be applied to specifications such as next generation sub-1GHz WLAN's macro coverage, CGWLANs, and/or HEW WLANs. In a transmit-receive session, different frame types are sent with appropriate inter-frame spacings from the transmitter to the receiver, e.g., RTS-CTS-<Preamble+SIG+DATA>-ACK. This embodiment may be applicable to downlink transmission from the AP to the STA in infrastructure networks (in which case the transmitter is the AP), to uplink transmission from the STA to the AP in infrastructure networks (in which case the transmitter is the STA), and to P2P transmission from STA to STA in an independent network (in which case the first STA is the transmitter).

In this embodiment, signaling and associated procedures may be used to enable the transmission of different frames in a transmit-receive session at different transmit power levels. The transmit power levels used and the signaling used to enable the receiver utilize these transmit power levels may depend on the multiple access scheme.

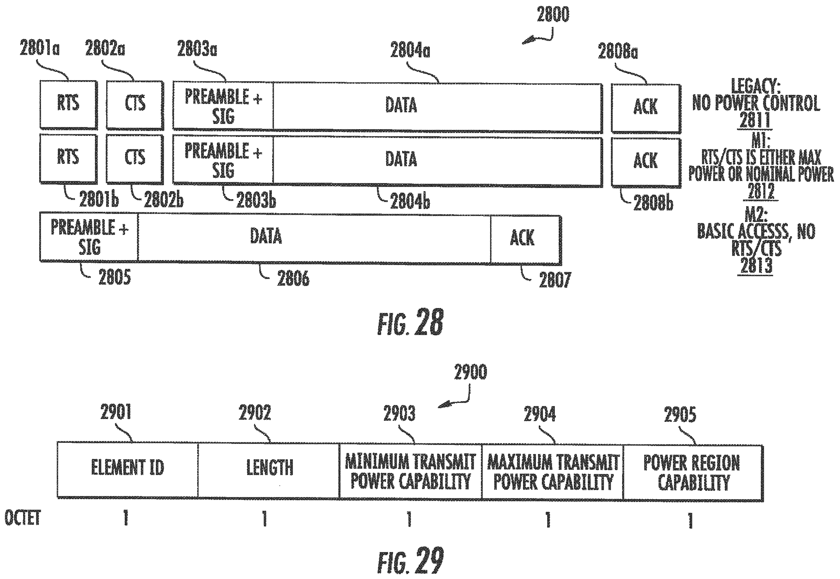

FIG. 28 provides an example in which different transmit power levels are used for an RTS-CTS multiple access method and a basic access method with no RTS-CTS 2800. In the legacy case 2811, no power control is used in transmitting the RTS frame 2801a, CTS frame 2802a, Preamble+SIG frame 2803a, data frame 2804a, or ACK frame 2808a. In case M1 2812, which also uses RTS/CTS transmission at either max or nominal power, the RTS frame 2801b and CTS frame 2802b may be transmitted at a different power than the Premable+SIG 2803b, data frame 2804b, and ACK frame 2808b. In case M2 2813 the Preamble+SIG 2805 is transmitted at a different power from the data frame 2806 and ACK frame 2807. The difference in power allows the RTS, CTS or Preamble+SIG frames to be overheard by other nodes for proper frame deferral in the CSMA/CA multiple access schemes.

A STA/AP that may transmit different frames (or different parts of a frame in the case of the Preamble+SIG+DATA frame) at different power levels is defined herein as a power-control region capable STA/AP. STAs/APs that do not have this feature are defined herein as non-power-control region capable. A power-control region capable network may be one in which the STAs and APs are operating in a power-control region capable manner.

TPC signaling and associated procedures may be used to enable a change in the TPC power during a transmit-receive session between two STAs in accordance with another aspect of this embodiment. In this CSMA/CA scenario, there is no RTS/CTS transmission. The STA detects the preamble and based on the duration field, defers its transmission for the length of the frame added to the interframe spacing and ACK duration.

In TPC for preamble detection with frame length deferral, the AP may transmit all management frames at the network power level to ensure that all STAs are able to decode the management frames. The data transmission power level may be negotiated individually between STAs to ensure that the STA-AP power is at the minimum power level required to maintain the P2P transmission (including the link margin).

The following procedure provides an example that may be used to enable multiple transmit power levels in a transmit-receive session. Prior to proceeding with the power control procedure, the STA's TPC capabilities may be checked using the TPC capabilities signaling as described above. The AP and the STA may provide an indication (either by sending a capability request or advertising) that they are capable of the technique, to ensure the STA may operate properly in the network. This may be done in one of the following methods:

(1) One method is modification of the capabilities information field, which may be a 16-bit field. The use of the DSSS-OFDM option may be deprecated. As such, this bit may be adopted for use in a TPC enabled network. The AP may modify its network capability information field to indicate a power-control region capable network. The capabilities information field may be sent out by the AP in the beacon to advertise the capabilities of the network to STAs in the BSS. For example when a STA desires to join a WLAN network, AP A may send out a beacon at a fixed TBTT interval. The STA may listen for the beacon and may join the network by starting authentication (a process by which the AP and the STA establish their identity) and sending an association request to the AP based on one of the following conditions. If the beacon transmitted from the AP indicates a power-control region capable network and the STA is power-control-region capable, then the STA may join the network. The AP and the STA may then operate in a power-control-region capable manner. If the beacon transmitted from the AP indicates a non-power-control region capable network, then the STA may join the network, and the AP and the STA operate in a non-power-control region capable manner regardless of the STA's power-control region capability. If the beacon transmitted from the AP indicates a power-control-region capable network and the STA is non-power-control-region capable then AP may not authorized access to STA to the network, i.e. the STA may not join the network and does not start the authentication process.

(2) Alternatively, the power capabilities IE may be extended by an octet to accommodate additional information on power region capable networks. FIG. 29 provides an example extended power capabilities IE 2900. The extended power capabilities IE may include but is not limited to an element ID field 2901, a length field 2902, a minimum transmit power capability 2903, maximum transmit power capability field 2904, and a power region capability field 2905. The STA may send out this IE in an association request or re-association request frame. The AP may accept or reject the STA based on the (re)association request.

For example, when a STA desires to associate with and send data to AP A, the STA may send an association request to the AP. The association request may include the updated power capability element with the power region capability octet set to [10000000], indicating the STA is power-control region capable. The AP may evaluate its resources and contingent upon resource availability and capability compatibility, may decide to admit the STA. The AP may send an association response frame to the STA containing an updated power capability element with the power region capability octet set to [10000000]. With this exchange, the AP may inform the STA that it is admitted into a power-control region capable BSS. The AP may send an association response frame to the STA containing an updated power capability element with the power region capability octet set to [00000000] or without the new element. With this exchange, the AP may inform the STA that it is admitted into a non-power-control region capable BSS. The AP may not send an association response frame to the STA. In this case, the AP may disallow the association due to resource availability or capability incompatibility. If admitted, the STA may begin sending data to the AP.

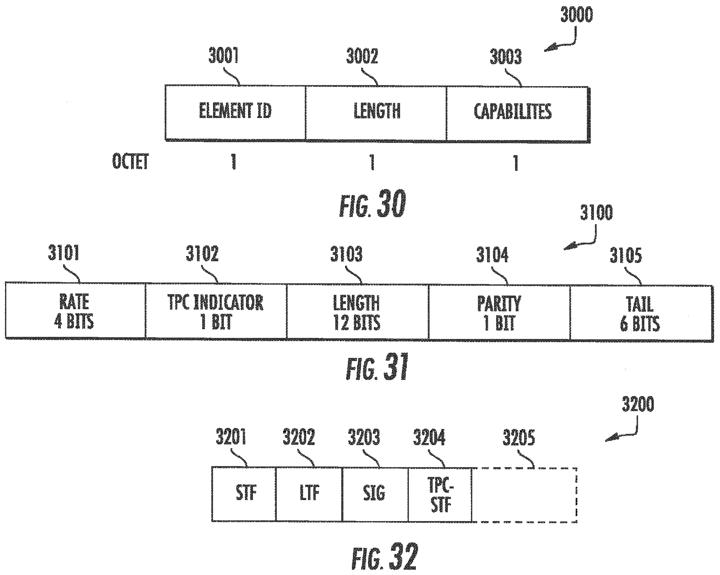

(3) The information may be advertised by the STA or AP by adding a flag to the extended capabilities element. FIG. 30 provides an example of an extended capabilities element 3000. The extended capabilities element may include but is not limited to an element ID field 3001, length field 3002, and capabilities field 3003. As shown in Table 5 below, capabilities element ID 47 may be used. The 8-bit capabilities field may be used for additional TPC features.

Table 5: Extended Capabilities Field

| ID | Information | Notes |
|----|-------------|-------|
| 47 | Multiple Power Level Capability | B0= 1, AP or STA may support Multiple TPC loops within a transmission |

For example, when a STA desires to join an AP and initiate an active scan, the STA may send out a probe request. The probe request may contain an extended capabilities element with the element ID 47 indicating the STA is power-control region capable. The AP may respond to the STA with a probe response indicating to the AP that it may be allowed to join the network. If AP A is power-control region capable, the AP may insert the extended capabilities element ID 47 in the probe response, and the STA and AP may both operate in a power-control region capable manner. If the AP is non-power-control region capable, the new element may not be transmitted in the probe response and the STA and AP may operate in a non-power-control region manner, i.e., as a traditional 802.11 WLAN. The AP may not respond to the STA with a probe response when the STA does not transmit the new element. This may indicate that the STA may not to be admitted into the BSS. If allowed, the STA may join the network by starting authentication (a process by which the AP and the STA establish their identity) and sending an association request to the AP.

The signaling and the procedures detailed above may be extended to additional TPC features in other embodiments and are not necessarily limited to this specific power-control region method.

On gaining CSMA/CA access to the medium, the STA or AP may transmit a data packet to the receiver at both the network power level and the P2P power level within the frame. Once the capabilities have been verified, the transmitting device (either STA or AP) may transmit data and control frames to each other at either network or P2P optimal power levels. The control frames may be transmitted at the network power level. The data transmission frame may be transmitted at two different power levels. The preamble (STF, LTF) and SIG may be transmitted at the network power level, while the service field and data may transmitted at the P2P power level. For scenarios where the STAs/AP are able to overhear the preamble only, the STA may defer its transmission for a duration of the frame length + 2 * SIFS_duration + ACK_length. All STAs in the network need to overhear the preamble to enable them to defer their transmission for the appropriate time. The P2P power level may then be utilized. The point in the frame at which the transmit power changes from the network power level to the P2P power level is the TPC change boundary.

The transmitting device may insert an STF at the TPC change boundary in the transmit-receive frame sequence. In downlink transmission from the AP to the STA in infrastructure networks, the transmitting device is the AP and accordingly may insert an STF at the TPC change boundary in the transmit-receive frame sequence. In uplink transmission from the STA to the AP in infrastructure networks, the transmitting device is the STA and accordingly may insert an STF at the TPC change boundary in the transmit-receive frame sequence. In P2P transmission from STA to STA in an independent network, the transmitting device is the first STA and accordingly may insert an STF at the TPC change boundary in the transmit-receive frame sequence. This is essential for proper AGC calibration to the new power level at the receiver.

In legacy or greenfield scenarios, a TPC-STF may be inserted at the start of the TPC change within the transmit-receive frame sequence. This is an STF with parameters identical to the legacy STF. To indicate the presence of a TPC-STF, an extra TPC indicator bit may be added to the SIG (bit 5). FIG. 31 provides an example in which an extra TPC indicator bit may be added to the SIG (bit 5) 3100. The SIG in this example may include but is not limited to the rate field 3101, TPC Indicator 3102, length field 3103, parity field 3104, and tail field 3105.

Alternatively, a bit may be reserved in the TPC-SIG-B symbol detailed in the embodiments described above. An auto detect feature also may be added, for example, and the SIG is rotated by x degrees where $0 < x < 90$. FIG. 32 shows an example data frame with the preamble, SIG, and TPC short training field 3200. This example includes but is not limited to an STF 3201, LTF 3202, SIG 3203, TPC-STF 3204, and data frame 3205.

In mixed mode scenarios such as in 802.11n or 802.11ac where additional STF symbols (such as the HT-STF) may be added, there may be no need to add a TPC-STF. The TPC change boundary may occur at the start of the (V)HT-STF. An extra TPC indicator bit may be added to the SIG (bit 5). Alternatively or additionally, a bit may be reserved in the TPC-SIG-B symbol described above.

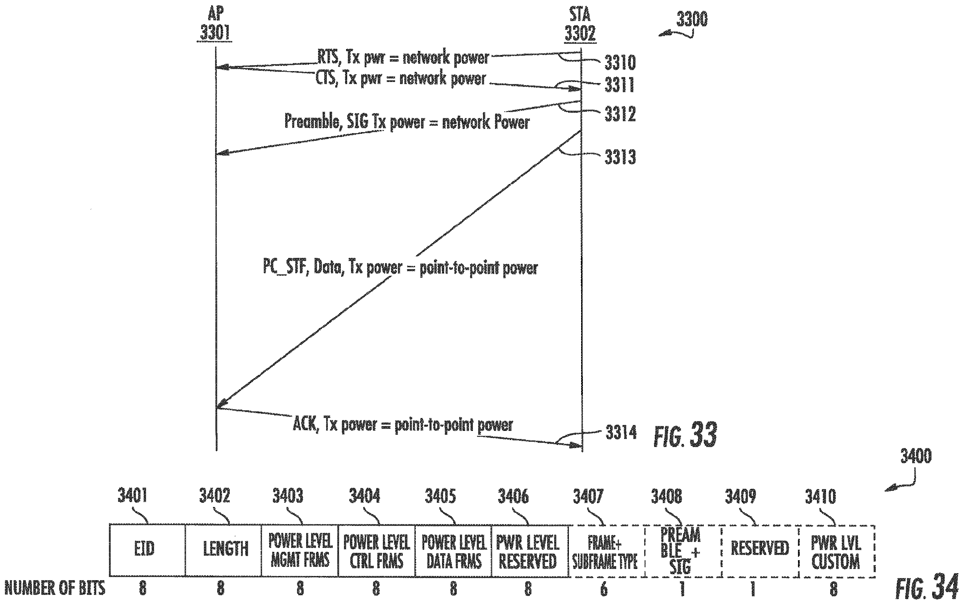

FIG. 33 provides an example flow diagram for an example procedure for TPC with a TPC change boundary using a TPC-STF 3300. In this procedure, STA 3302 transmits an RTS 3310. AP 3301 may respond with a CTS 3311. STA 3302 may then transmit a preamble and SIG with the transmit power at the network power level 3312. STA 3302 may then transmit the TPC-STF and data with the transmit power at the P2P power level 3313. AP 3301 may then transmit an ACK to SAT 3302 at the P2P power level 3314.

Signaling and associated procedures to enable transmission of specific frame types at fixed power levels may also be used in accordance with another aspect of this embodiment. This may enable power control for virtual carrier sensing using the RTS-CTS transmission frames as well as physical carrier sensing using the preamble + SIG and frame deferral. This embodiment may be applicable to downlink transmission from the AP to the STA in infrastructure networks (in which case the transmitter is the AP), to uplink transmission from the STA to the AP in infrastructure networks (in which case the transmitter is the STA), and to P2P transmission from STA to STA in an independent network (in which case the first STA is the transmitter).

Frame IDs may be defined for the different frame types. In this case, the type and sub-type fields that may be found in the frame control field may be used to identify the function of the frame. In the frame control field, the two bits [b3 b2] identify the frame type as management (00), control (01), data (10), or reserved (11) while the four bits [b7 b6 b5 b4] indicate the subtype value within the frame type. Frame subtypes that are not specified may default to the power level associated with their type description. For the data type, the initial preamble and SIG may default to the transmit power associated with management type frames or a Preamble+SIG boost flag may be signalled separately.

FIG. 34 provides an example TPC IE that may be used to indicate the different frame types that may be transmitted and the power levels that the different frame types may be transmitted at for the transmit-receive session 3400. The TPC IE may include but is not limited to an element ID field 3401, length field 3402, power level management frames field 3403, power level control frames field 3404, power level data frames field 3405, power level reserved field 3406, frame + subframe type field 3407, preamble + SIG field 3408, reserved field 3409, and power level custom field 3410. The values P_i may be absolute dBm value from -127 to + 128 dBm written in 2's complement or could be a relative value.

The capabilities of the AP and the STAs in the network may be evaluated using the following example procedure: the AP may send out a beacon with a TPC IE as described above indicating the transmit power levels for specific frame types. Alternatively, the IE may be sent to a specific STA or group of STAs. The fields may be set as follows:

Table 6: TPC Information Element Fields

| Field | Value | Comment |
|---|---|---|
| Management Frames | 0 dBm | |
| Control Frames | 0 dBm | |
| Data Frames | -12 dBm | |

(continued)

| Field | Value | Comment |
|---|---|---|
| Reserved | | |
| Frame + Subframe Type | 100000 | All data frames |
| PLCP Head Index | No | Keep Preamble+SIG at mgmt power level |
| Power level Custom | -12 dBm | |

Upon receiving the beacon, the STAs may transmit each frame with the recommended power for that frame type. Note that the power level fields may be relative to a nominal transmit power rather than an absolute transmit power.

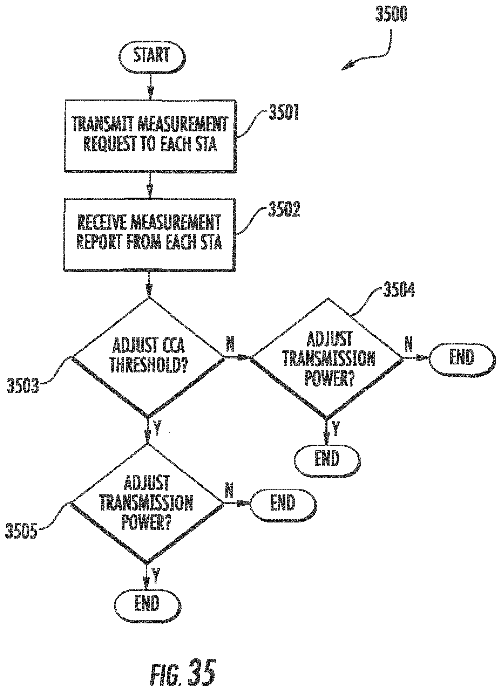

FIG. 35 shows a flow chart of an example procedure in which a CCA threshold and/or the transmit power may be modified in dense networks to optimize the transmit power control and clear channel assessment (CCA) in accordance with a fourth embodiment 3500, which may be used in combination with any of the embodiments described herein. In the examples described herein and in the drawings, the terms "adjust" and "modify" are interchangeable. The definition of modify or adjust may include but is not limited to reduce, increase, decrement, or increment. IEEE 802.11 WLAN networks are increasingly being deployed in dense environments where there are multiple APs and BSSs and overlapping networks. When available, adjacent APs may choose different frequency bands of operation, but in some cases this may not be possible. When two or more adjacent APs use the same frequency bands, interference becomes a problem, especially for STAs on the edge of coverage. However, TPC schemes that modify a CCA thresholds and/or transmit power levels may alleviate interference issues and may result in performance enhancements including but not limited to network throughput efficiency. The CCA threshold may be used by STAs to decide whether a channel is available for use or not. For example, when TPC is implemented in a BSS, then the CCA threshold may be modified for each STA accordingly as well which may mitigate impacts to coverage. The following metrics are used in this embodiment and may be defined as follows:

(1) CCA_threshold may be defined as the energy detect CCA threshold used in the BSS, which may be different for different BSSs in an ESS. When a device detects energy above the CCA_threshold, the device may declare a busy channel and not proceed to transmit. When a device detects energy below the CCA_threshold, the device may declare an empty channel and may proceed to transmit.

(2) Estimated CCA_margin may be defined as the difference between the CCA_threshold and a CCA_value estimated by a STA. If estimated CCA_margin is positive, it may be indicative of the level of interference in the network. The frequency of transmission and method of estimation is an implementation issue.

Furthermore, in the example procedures described with respect to this embodiment, it may be assumed that the product of the optimal power transmit level and CCA_threshold for each BSS is a constant. When each metric is represented in its unit value, Pnom x CCA_threshold = constant. When each metric is represented in its dB value, Pnom_dB + CCA_threshold_dB = constant_dB.

In the procedure of FIG. 35, an AP may transmit a measurement request to each STA 3501 in its BSS. The AP may then receive a measurement report from each STA 3502. All STAs in the network may reply to the AP or a subset of STAs in the network. The AP then may modify/adjust the CCA_threshold 3503 based on the received measurement reports from the STAs. If the AP does adjust the CCA_threshold 3503, the AP may also adjust the transmission power 3505. If the AP does not adjust the CCA_threshold 3503, the AP may still decide to adjust the transmission power 3504.

In the following C_1 may be a first CCA threshold, and C_2 may be a second CCA threshold which is predetermined and/or configured. They may be configured through their definition in a MAC IE. When the AP decides whether to adjust the CCA_threshold 3503 and/or transmission power 3504 and 3505, it may use the following operation:

(1) If CCA_busy_fraction > C_1 & estimated CCA_margin > C_2, the AP may increase the CCA_threshold by x, resulting in CCA_threshold_new = CCA_threshold + x. Alternatively or additionally, the AP may reduce the nominal transmission power in the network by x, resulting in P_new = Pnom - x.

(2) If CCA_busy_fraction < C_1 || estimated CCA_margin < C_2, the AP may reduce the CCA_threshold by x resulting in CCA_threshold_new = CCA_threshold -x. Alternatively or additionally, the AP may increase the nominal transmission power in the network by x, resulting inP_new = Pnom + x.

Alternatively or additionally, other metrics may also be used in adjusting or optimizing the CCA threshold and transmit power including but not limited to the following: virtual carrier sensing utilization as known by an AP; physical carrier sensing based on preamble decode based utilization; overall AP backoff statistics; or group based CCA threshold signaling, similar to the first embodiment described above.

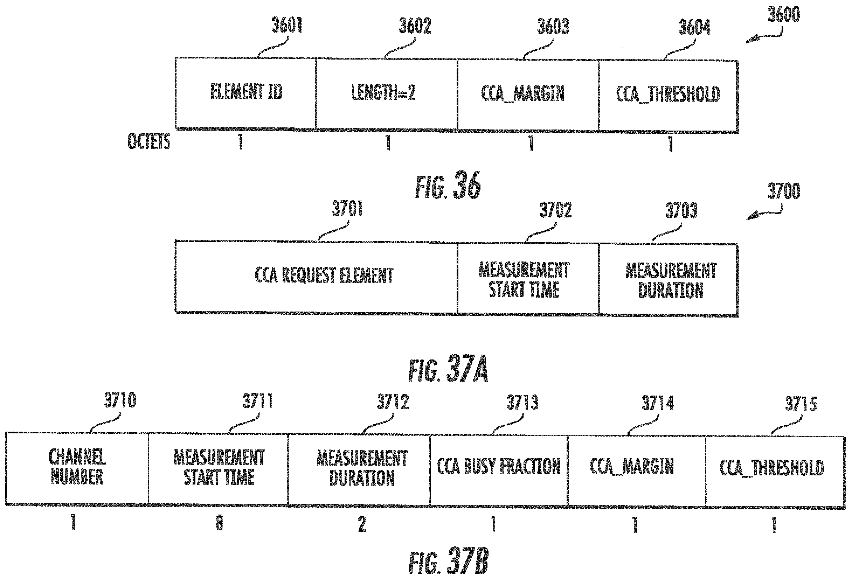

FIG. 36 shows an example of a CCA modification element 3600 that may be used to broadcast the value on the AP beacon when the CCA_threshold is adjusted in accordance with the procedure described above. The CCA modification element may include but is not limited to signaling the following: an element ID field 3601, length indicating length = 2 field 3602, estimated CCA_margin field 3603, and CCA_threshold field 3604. A value of [00000000] for any element within CCA modification element 3600 implies the element is disabled. In a system in which the CCA threshold may be incremented or decremented, the CCA_margin 3603 may be the value to increment or decrement the CCA threshold and the CCA_threshold field 3604 may identify a need to modify the CCA threshold.

FIG. 37A shows an example of the measurement request element 3700 used by the APs to request measurements in accordance with the procedure described above. The measurement request may include but is not limited to a CCA request element field 3701, a measurement start time field 3702, and a measurement duration field 3703.

FIG. 37B shows an example of the measurement report element used by the STAs to report measurements in accordance with the procedure described above. The measurement report may include but is not limited to a channel number field 3710, measurement start time field 3711, measurement duration field 3712, CCA busy fraction field 3713, estimated CCA_margin field 3714, and CCA_threshold field 3715. The procedure described in FIG. 35 may use the CCA busy fraction field 3713 for the CCA report. The CCA busy fraction field 3713 may contain the fractional duration over which CCA indicated that the channel was busy during the measurement duration. The resolution of the CCA busy measurement may be in microseconds. The CCA busy fraction value may be defined as Ceiling (255 × [Duration CCA indicated channel was busy (μs)] / (1024 × [Measurement duration (TUs)])). Alternatively or additionally, the estimated CCA_margin field 3714, and CCA_threshold field 3715 fields may be used for the CCA report as shown in FIG. 37B.

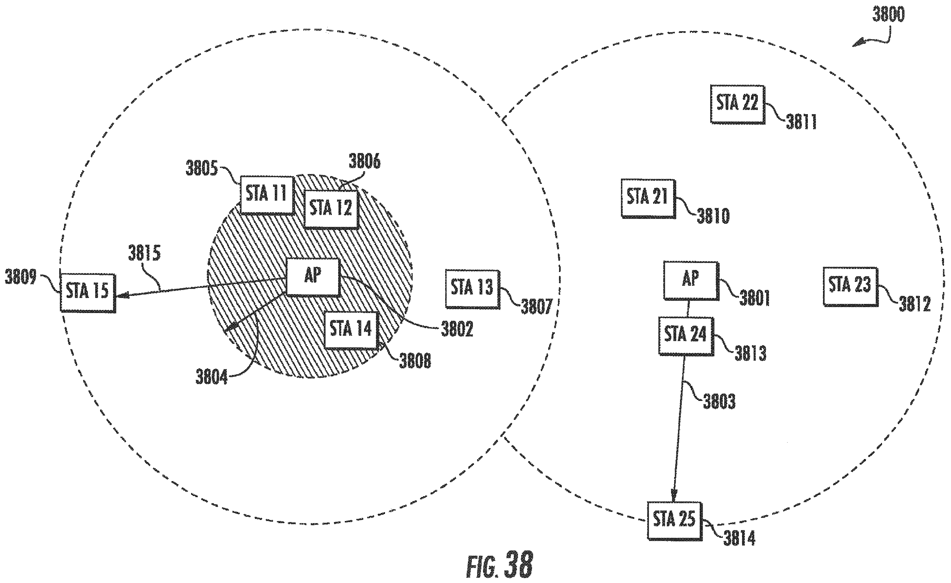

FIG. 38 shows an example system in which an adjacent AP makes a coverage adjustment to reduce interference in accordance with another aspect of this embodiment 3800. When two adjacent APs are on the same frequency band, normally when one is transmitting, the other does not transmit to reduce interference. While this allows interference-free transmission in one BSS, the overall throughput is reduced. However, with appropriate TPC mechanisms as shown in the example of FIG. 38, it may be possible that two APs 3801 and 3802 may transmit simultaneously. This TPC mechanism may reduce the effective coverage of a neighboring BSS during a BSS-edge transmission but restore it during normal transmissions. A BSS-edge STA may be defined herein as a STA that is adversely affected by a neighboring BSS during reception or adversely affects a neighboring BSS during transmission.

In the example of FIG. 38, AP 3801 may transmit to BSS-edge STA 25 3814 with higher power 3803 while AP 3802 may transmit to non-BSS-edge STAs such as STA 11 3805, STA 12 3806, and STA 14 3808 with reduced power 3804. While transmitting to non-BSS-edge STAs, AP 3802 may not transmit to BSS-edge STAs such as STA 15 3809 and STA 13 3807, which would require higher power 3815. During this period of coverage adjustment, AP 3801 may have the capability to transmit to all other STAs in its BSS including as STA 21 3810, STA 22, 3811, and STA 23 3812.

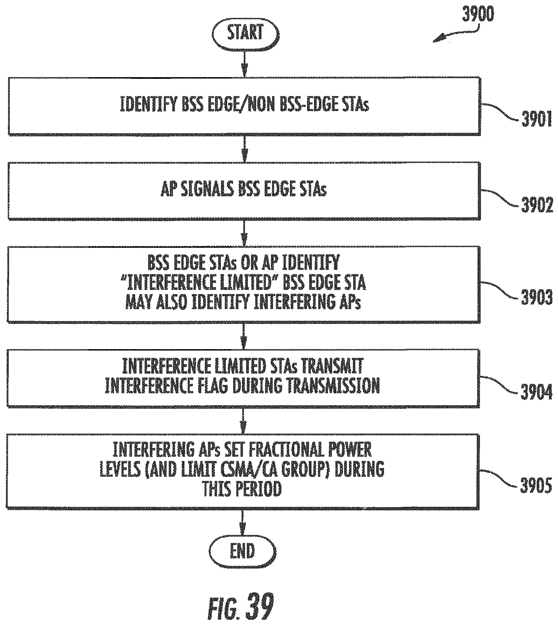

FIG. 39 shows a flow chart of an example procedure to adjust the coverage of a BSS to reduce the amount of interference to a neighboring BSS in the event of a BSS-edge STA transmission 3900. Prior to proceeding, the STA's TPC capabilities must be checked using the TPC capabilities signaling as described in the embodiments above. If the STA either does not support the feature, or is otherwise instructed not to use the feature, the remainder of the procedure of FIG. 39 may be skipped and packet transmission may follow the specification for legacy operation, e.g., 802.11ac or 802.11ah.

As shown in FIG. 39, the AP may identify the BSS-edge STAs and non BSS-edge STAs 3901 under their control. BSS-edge STAs and non BSS-edge STAs 3901 may be identified using a variety of different techniques, or a combination thereof:

(1) The AP may estimate the path loss of the channel to the STA and the RSSI of the individual STAs. This may be done by using TPC request and TPC response frames between the AP and STAs. The AP may then rank the STAs based on path loss and designate a bottom percentage as BSS-edge STAs. Alternatively, the AP may designate those STAs with path loss beyond a certain threshold as BSS-edge STAs.

(2) The AP may use the geographical location of STAs, if available, to identify BSS-edge STAs and may signal the STAs accordingly. This may be based on Global Positioning System information for example or other location-based techniques.

(3) The AP may be genie-aided, i.e., the information is derived from a network management tool.

(4) The STAs may signal the difference between the RSSI of the associated AP and the next strongest AP(s). Then STAs with differences less than a threshold may be identified as BSS-edge STAs. In this case, a neighbor report element may be modified to add a field that indicates the RSSI difference between the AP reported and the associated AP. Alternatively, some of the reserved bits in the BSSID information field may be used to signal the RSSI difference.

The AP may then signal BSS edge STAs 3902. The AP may transmit a BSS-edge indicator flag to the STA at the BSS edge in one of the following ways: as a flag to the TPC-SIG proposed in the first embodiment detailed above, as a new MAC IE, or added as a flag to a modified CTS frame. STAs that have been designated as a BSS-edge STAs, may then transmit a BSS-edge indicator flag whenever receiving or transmitting.

BSS-edge STAs or APs may also identify interference limited BSS-edge STAs and may also identify interfering APs 3903. For example, in a downlink transmission, the AP may send an RTS to the STA. The STA may respond with a modified CTS with the BSS-edge indicator flag set to ON. The indicator flag may also include the IDs of specific neighboring or interfering APs and other interference limited STAs. The neighboring AP that overhears or is specified by the CTS may then become aware that a BSS-edge STA is receiving data. The decision to transmit this indicator flag may be network directed by a WiFi controller, controlled by the serving BSS AP, or autonomously decided by the STA. The indicator flag may be a new IE signaled on the MAC or a new field signaled on the PHY (for example, the TPC-SIG proposed in the second embodiment described above).

The interference limited STAs may also transmit interference flags during transmission 3904. For example in an uplink transmission, the STA may send out an RTS to the AP. The AP may respond with a CTS frame. The STA may then transmit data. In this case, the BSS-edge indicator flag may be added to the extended TPC-SIG (for example, the TPC-SIG proposed in the second embodiment described above) in the data transmission frame to enable instantaneous knowledge of BSS-edge transmission by neighboring APs.

The interfering APs may set fractional power levels and limit the CSMA/CA group during this period 3905. As such, the APs may choose to transmit to non-BSS edge STAs for the duration of the neighboring cell CTS. The neighboring AP may use procedures similar to those described above in the second embodiment to limit the neighboring cell coverage.

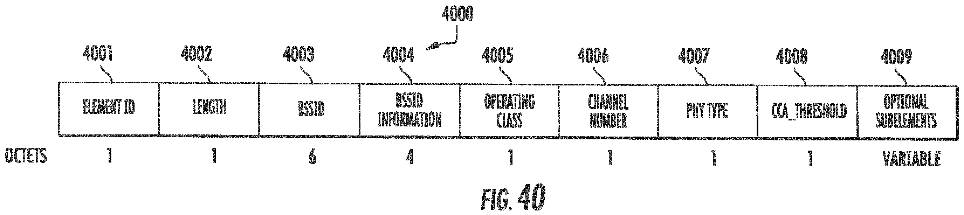

FIG. 40 shows an example of the modified neighbor report element that may be used in the procedure detailed above 4000. The modified neighbor report element may include, but is not limited to an element ID field 4001, a length field 4002, a BSSID field 4003, a BSSID information field 4004, an operating class field 4005, a channel number field 4006, a PHY type field 4007, a CCA_threshold field 4008, and a field for any other optional subelements 4009.

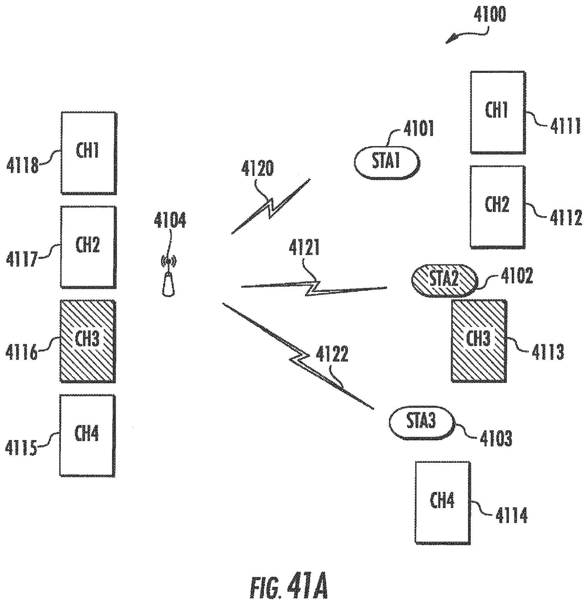

FIG. 41A shows an example system in which TPC may be used over multiple channels and/or frequency bands in accordance with a fifth embodiment 4100, which may be used in combination with any of the other embodiments described herein. As shown in FIG. 41A, an AP may contiguously or non-contiguously aggregate four channels. To improve spectrum efficiency or satisfy QoS requirements, the AP may choose to assign the four channels to one or more users. In this example, the AP assigns the aggregated channels to three users. In the example system of FIG. 41A, AP 4104 may operate on Ch1 4118, Ch2 4117, Ch3 4116, and Ch4 4115. Accordingly AP 4104 may receive UL transmission 4120 from STA1 4101 operating on Ch1 4111 and/or Ch2 4112. Similarly AP 4104 may receive UL transmission 4121 from STA2 4102 operating on Ch3 4113, and AP 4104 may receive UL transmission 4122 from STA3 4103 operating on Ch4 4114. Note that Ch1 4118 may be the same as Ch1 4111, Ch2 4112 may be the same as Ch2 4117, Ch3 4113 may be the same as Ch3 4116, and Ch4 4114 may be the same as Ch4 4115.

In 802.11 WLANs, the multiple channels used for P2P transmission as shown in FIG. 41A may be one of the following types:

(1) Transmission using non-contiguous channel aggregation: This covers transmissions over multiple channels in the same frequency band but with aggregated channels selected such that they are not adjacent to each other. For example, in 802.11ac, an 80+80 non-contiguous channel mode is specified. Also, smaller bandwidth channels are under consideration with the introduction of 802.11af and 802.11ah. To satisfy data requirements, these smaller channels may be aggregated but due to frequency band availability and regulatory restrictions, the aggregated channels may not be adjacent.

(2) Transmission during multi-band communication: This covers transmissions over multiple channels in different frequency bands. For example, in 802.11ad multi-band communications are supported in which data may be transmitted in a frequency band at 60 GHz and simultaneously transmitted in a frequency band at 2.4GHz or 5 GHz.

(3) Transmission during multi-band communications to multiple users: future WLAN systems may allow transmissions to/from multiple users on multiple bands. In this scenario, multiple packets from multiple users may arrive at the AP with different power levels. This may require an automatic gain control (AGC) with high dynamic range increasing the cost of hardware if power control is not used. Otherwise, the accuracy of the analog to digital converter (ADC) may be reduced. Furthermore, the component channels may have different regulatory power-headroom requirements, interference profiles, frequency selective characteristics, etc., and as a result have different TPC requirements.

In this embodiment the TPC algorithms and signaling procedures may be modified to accommodate these differences. TPC procedures may account for and be based on channel bandwidth, individual channels in channel aggregation, and the possible bandwidth (BW) format combinations and aggregation. BW format is defined herein as the frequency and bandwidth of the channel(s) used for transmission.)

According to one aspect of this embodiment, AP 4104 and STA1 4101, STA2 4102, and STA3 4103 in the BSS may negotiate the TPC that may occur on each of the non-contiguous transmission channels. STA1 4101, STA2 4102, and STA3 4103 may indicate their preferences, and AP 4104 may either approve the choices of STA1 4101, STA2 4102, and STA3 4103 or override them and choose a different multi-channel and/or multi-band TPC method. The following are possible scenarios:

(1) In IEEE 802.11ac, IEEE 802.11af, and IEEE 802.11ah, multiple channels within the same overall frequency band may be aggregated to form one effective transmission channel. However, due to limitations in the available spectrum, the channel indices of the constituent channels may be selected such that they are non-contiguous, for example, the 80+80 transmission mode in IEEE 802.11ac.

(2) In IEEE 802.11ad, multi-band frequency transmission is permitted in which data may be transmitted simultaneously on different frequency bands, e.g., simultaneous 5 GHz transmission and 60 GHz transmission.

In both cases, the TPC procedure may be modified to account for dependencies between the channel, power limitations on the channels, and signaling to reduce the amount of overhead.

Each band may be subject to different transmitting power limitations. These limitations may arise from different transmit power capabilities in each band, i.e., the minimum and maximum power with which a STA is capable of transmitting in the current channel. The interaction between the transmit power capabilities per channel in an aggregated or multi-band transmission and the total transmit power the STA/AP is able to transmit at also affects the TPC procedure. Finally, the number of AGCs in the device and the dynamic range of the AGCs available affect the interaction of the TPC procedures in each channel.

This embodiment defines the following:

Primary and secondary channels: the primary channel may be any one of the channels in the non-contiguous aggregated case and may for example be the lower frequency channel in the multi-band case. The TPC dependency may be defined as the dependency of the TPC operation and/or the TPC signaling between the primary and secondary bands.

TPC operation dependency: the TPC operation dependency may specify when the TPC operation (whether open loop, closed loop, or any combination thereof) is performed independently for each band or cooperatively across all bands. In a cooperative case, the TPC operation may be performed on the primary channel only or on an effective channel derived from an implementation specific combination of the constituent channels.

TPC signaling dependency: this may specify when the TPC signaling is performed independently for each band or cooperatively across all bands. In a cooperative case, the TPC parameters for secondary bands may be a differential signal with the reference being the signal on the primary band. Alternatively, the TPC parameters may be a single value valid for all constituent bands.

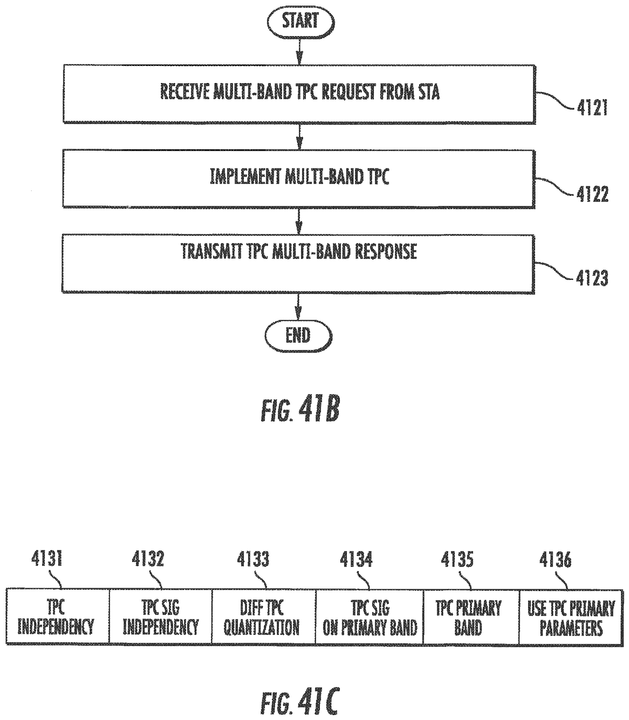

FIG. 41B shows an example procedure for implementing TPC for multi-band transmissions using the above definitions. The AP may receive a multi-band TPC request from the STA 4121. This request may contain a TPC multi-band IE with parameters set to the values the STA desires. A differential TPC quantization field may be limited to three bits to ensure that the multi-band response is a single octet.

Based on the capabilities of the STA, the AP may implement the desired multi-band TPC 4122 based on one of following:

(1) Independent TPC per band with independent signaling per band: the primary and secondary channels may perform TPC independently and all TPC signaling may be performed independently per band, subject to the maximum transmit power allowable by the device, the transmit power capability per band, and the regulatory transmit power limits per band.

(2) Independent TPC per band with dependent signaling per band: the primary and secondary channels may perform TPC independently, but all TPC signaling may be relative to the primary channel. TPC information such as the link margin response that feeds back the transmit power, the link margin, or the transmit power capability that feeds back the maximum and minimum allowable transmit power for the channels may be fed back in absolute terms for the primary channel and differential values relative to the primary feedback for secondary channels. The differential information may all be transmitted in the primary band or separately in each secondary band.

(3) Dependent TPC per band: the TPC may be performed on the primary band only and the secondary bands may infer the TPC parameters of their bands from the feedback in the primary band. This may only occur in cases where the bands have some specific relationship known to the STA/AP. For example, the secondary channel(s) may use the primary channel TPC parameters adjusted for frequency and channel interference profile.

(4) Single TPC over all bands: the TPC may be performed over multiple bands as if it is a single frequency band. RSSI measurements, transmit powers, etc., may be measured across the entire multiple bands.

The AP may then reply by transmitting a TPC multi-band response 4123. The AP's response may also include a TPC multi-band IE and may be identical to that of the STA or it may override the decision of the STA, by for example performing an override that is of less complexity than the requested configuration.

FIG. 41C provides an example of the TPC multi-band IE used in the above procedure. The TPC multi-band IE may be used to signal TPC bandwidth dependent parameters to the STA. The TPC multi-band IE may include but is not limited to the following: a TPC independency element 4131, a TPC signal independency field 4132, a differential TPC quantization field 4133, a TPC signaling on the primary band field 4134, a TPC primary band field 4135, and a use TPC primary parameters field 4136.

Details of the TPC multi-band IE parameters are shown in Table 7.

Table 7: TPC Multi-Band Element Fields

| Element Item | Size | Values |
|---|---|---|
| TPC Independency | 1 bit | 0: independent<br>1: dependent |
| TPC Signaling Independency | 1 bit | 0: absolute TPC<br>1: Differential TPC |
| Differential TPC quantization | x bits | Indicates quantization desired for differential TPC information signaling |
| TPC Signaling on Primary band | 1 bit | 0: Signal on secondary band<br>1: Signal on primary band |
| TPC Primary band | 1 bit | 0: not primary<br>1: primary |
| Use TPC Primary parameters | 1 bit | 0: Use own parameters<br>1: use primary for all bands |

Another aspect of this embodiment may be used for TPC in multiband systems with single/multiple user transmissions. Some of the existing WLAN systems support multiband transmission to a single user. Future WLAN systems may support multiple users with multiple frequency channels either contiguously or non-contiguously aggregated. MU-PCA introduces a multi-user/single-user parallel channel access scheme over a WLAN system. Downlink and Uplink Coordinated Orthogonal Block Based Resource Allocation (COBRA) enables multiple STAs coordinated access within a frequency band in the WLAN. Both technologies may assume that multiple users share the multiple frequency resources. Due to channel variation on different frequency bands, and the near/far issue in the multiuser scenario, power control may be desired for multiband transmissions, especially for the uplink multiband transmission.

For single user transmission, the received signals may have different impairments over multiple bands, which may introduce extra signal variation on multiband. The frequency channel also may vary from one frequency band to another frequency band, and thus the received signal power may be different. With multiuser transmissions, the same issues may remain. Moreover, because the distance between the AP and STAs may be different, the received power variation issues may be more significant. This may require a large dynamic range or reduced ADC accuracy at the receiver if a single RF chain is provided. Power control mechanisms may help align the received power and thus improve the system performance.

Depending on the AP/STA's capability and specific channel access mechanisms, the power control mechanism may be classified into two categories.

(1) In-channel power control: the channel(s) used for power measurement may be the same channel(s) for data transmission. For example, as shown in FIG. 41A, STA1 4101 may be assigned Ch1 4111 and Ch2 4112 for uplink data transmission 4120. With in-channel power control, AP 4104 may have a chance to measure the receive power from STA1 4101 on both Ch1 4111 and Ch2 4112, and adjust the power accordingly.

(2) Out-channel power control: the channel(s) used for power measurement may be different from the channel(s) used for data transmission. For example, the channel assignment may follow the sequence exchange right before the multiuser uplink transmission session may be limited on the primary channels. In this scenario, the AP may use power measured on the primary channel to estimate the power on the other channels. The AP may maintain a long time average on received power for each channel for each STA or maintain received historical power differences between the primary channel and other channels over time and use that information to compensate the out-channel power estimation errors.

Numerous methods or mechanisms may be used to perform uplink power control for multi-user multi-channel transmissions. The goal of any method for uplink power control for multi-user multi-channel transmission is to exchange power control frames or IEs before the multi-band uplink transmission session begins, so that the AP has the knowledge that it may need to adjust the transmit power of each STA on each band. As a result, the signals from single/multiple STA(s) may reach the AP with similar power level.

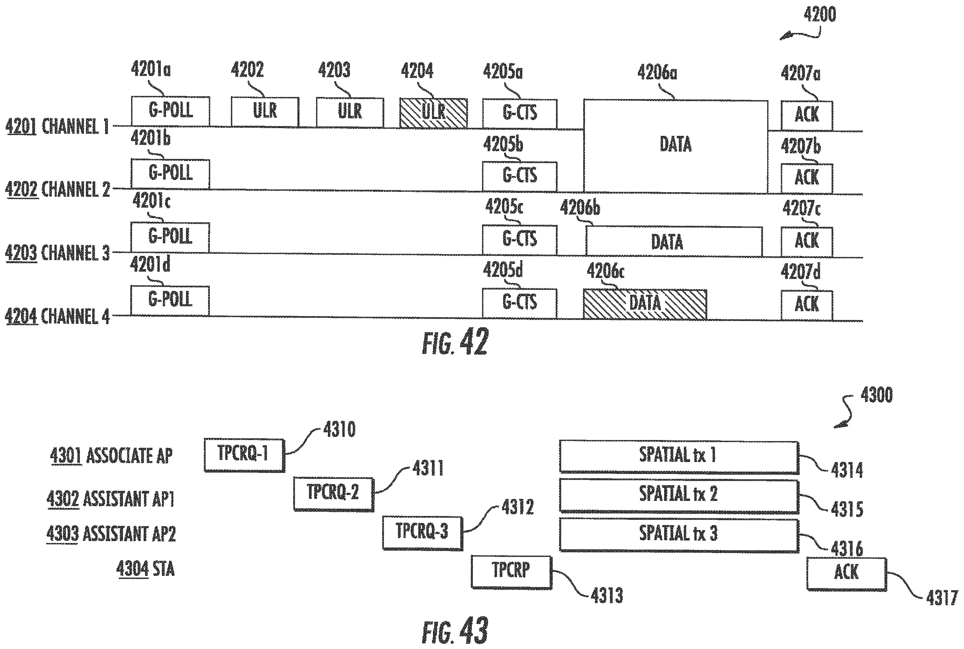

FIG. 42 provides an example procedure for multi-user multi-channel transmission 4200. The example of FIG. 42 uses G-Poll (Group-Poll) frames, ULR (Uplink Request) frames, and G-CTS (Group-CTS) frames for standalone uplink MU-PCA. The channel access scheme shown in FIG. 42 is one example channel access method where STA1 transmits an uplink packet on channel 1 4201 and channel 2 4202; STA2 is allocated on channel 3 4203; and STA3 is on channel 4 4204.

The AP may acquire the medium and poll STA1, STA2, and STA3 by transmitting a G-Poll 4201a on channel 1 4201 for STA1, G-Poll 4201b on channel 2 4202 for STA1, G-Poll 4201c on channel 3 4203 for STA2, and G-Poll 4201d on channel 4 4204 for STA3. The AP may then schedule them to transmit ULR frames sequentially. In this example, out-channel power control may be utilized. For example the ULR frames may be transmitted on a primary channel only, and data frames may be transmitted on multiple channels. In-channel power control may be implemented when the ULR frames are transmitted sequentially on the data channels. The AP may include a TPC Request element in its downlink polling frames.

Intended STAs transmit ULR frames 4202, 4203, and 4204 sequentially. This uplink transmission frame may also be implemented as other frames, such as a modified ACK frame, a modified RTS frame, or with another frame format. The uplink frame may contain the transmit power used field and/or link margin field. The transmit power used field may follow the existing definition and indicate the actual power used by the STA to transmit the uplink frame. The link margin field may be predefined or implementation based. It may contain the measured link margin of the previously received polling frame from the AP.

The AP may collect the information from all the intended STAs. The AP may measure the received power on the uplink transmission of each intended STAs. According to the transmit power used field and maximum power of each STA, the AP may align all STAs with a common target received power. According to this common target received power, the AP may ask each STA to adjust the transmit power accordingly. The AP may assign each STA a new transmit power explicitly, or the AP may ask each STA to increase or decrease a certain unit of transmit power. All this information may be contained in a power control element that is broadcast by the AP to all the intended STAs. Alternatively or additionally, the AP may choose to transmit power control elements to each STA sequentially. With in-channel power control, the AP may adjust the transmit power of each STA according to the measured RSSI and transmit power. With out-channel power control, the AP may apply the power margin to each STA, which is used to compensate for the power difference between channels. Note that within a TxOP, a periodic or continuous TPC procedure may be used, in which the AP continually sends TPC recommendations to each STA as proposed in the second embodiment described above.

STA1 may receive G-CTS frames 4205a and 4205b on channel 1 4201 and channel 2 4202, respectively. Similarly STA2 may receive G-CTS frame 4205c on channel 3 4203, and STA3 may receive G-CTS frame 4205d on channel 4 4204.

STA1 may then transmit uplink data 4206a on channel 1 4201 and channel 2 4202, STA2 may transmit uplink data 4206b on channel 3 4203m and STA3 may transmit uplink data 4206c on channel 4 4204. The AP may respond with ACKs 4207a, 4207b, 4207c, and 4207d.

FIG. 43 provides an example signaling exchange to enable power control for multiple WLAN transmitters 4300 in accordance with a sixth embodiment, which may be used in combination with any of the other embodiments described herein. When multiple STAs transmit at the same time to a common AP, for example in MIMO transmissions, the signal power from each STA arriving at the AP may be different. In practice, it may be desirable to control the transmit power of each participating STA such that when the signals arrive at the AP, the received power from all STAs are approximately at the same level. Similarly, when multiple APs transmit at the same time to a common STA (e.g., downlink multi-AP transmissions), it may be desirable to control the transmit power of each AP such that when the signals arrive at the STA, the received power from all APs are approximately at the same level. In the example of FIG. 43, three APs transmit simultaneously to one single STA in an example signaling exchange to enable transmit power control request (TPCRQ) and response (TPCRP) prior to multi-AP transmissions. Associated AP 4301 may refer to the primary AP associated with STA 4304, while assistant AP1 4302 and assistant AP2 4303 may refer to the secondary APs associated (or partially associated) with STA 4304.

Associated AP 4301 may transmit TPCRQ-1 frame 4310 to STA 4304 to allow STA 4304 to estimate the path loss between STA 4304 and associated AP 4301. Assistant AP1 4302 may then transmit TPCRQ-2 frame 4311 to STA 4304. Assistant AP2 4303 may then transmit TPCRQ-3 frame 4312 to STA 4304. At the end of TPCRQ-3 frame 4312, STA 4304 may be able to estimate the received power based on the associated AP 4301, assistant AP1 4302, and assistant AP 2 4303. STA 4304 may then respond with a TPC response frame 4313. Multiple AP transmissions may then be directed to STA 4304. In the example of FIG. 43, spatial transmissions 4314, 4315, and 4316 in the same frequency are directed to STA 4304, which may respond with ACK 4317. The example procedure of FIG. 43 may also be applied to achieve transmit power control for multiple STAs when multiple STAs transmit to a single AP.

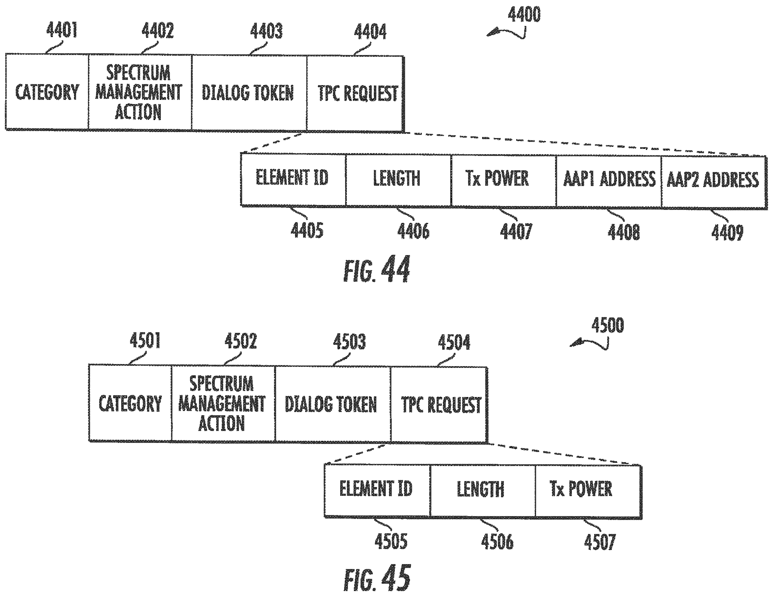

FIG. 44 provides an example of the frame format for the TPCRQ 4400 used in the procedure described above by the associated AP. The TPCRQ frame may include but is not limited to a category field 4401, spectrum management action field 4402, dialog token field 4403, and TPC request field 4404. TPC request field 4404 may include but is not limited to an element ID field 4405, length field 4406, transmit power field 4407, AAP1 address field 4408, and AAP2 address field 4409. Category field 4401 may be set to 0 to represent spectrum management. The spectrum management action field 4402 may be set to 2 to represent a TPC request frame. The dialog token field 4403 may be set to a nonzero value chosen by the associated AP to identify the transaction. The transmit power field 4407 may be used to represent the transmit power from the associated AP in sending the TPC request frame. The AAP1 address field 4408 may be used to represent assistant AP1's address or ID, which may be instructed by the associated AP to continue with a TPC power request. The AAP2 address field 4409 may be used to represent assistant AP2's address, which may be instructed by the associated AP to further continue with a TPC power request. The TPC request frame and TPC response frame may be transmitted in an omni-directional mode or a directional transmission mode.

FIG. 45 provides an example frame format for the TPCRQ 4500 used in the procedure described above by an assistant AP. The TPCRQ frame may include but is not limited to a category field 4501, spectrum management action field 4502, dialog token field 4503, and TPC request field 4504. TPC request field 4504 may include but is not limited to an element ID field 4505, length field 4506, and transmit power field 4507. The category field 4501 may be set to 0 to represent spectrum management. The spectrum management action field 4502 may be set to 2 to represent a TPC request frame. The dialog token field 4503 may be set to a nonzero value chosen by the assistant AP to identify the transaction. The transmit power field 4507 may be used to represent the transmit power from the assistant AP in sending the TPC request frame.

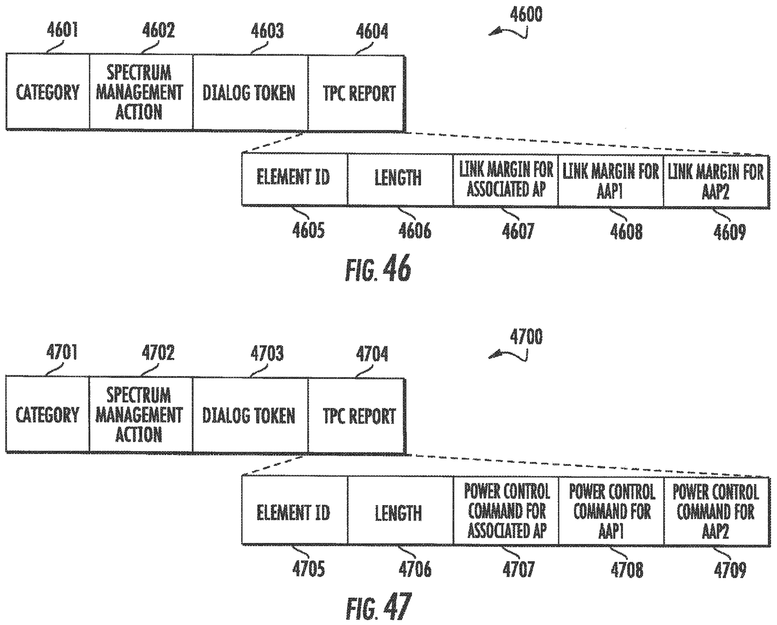

FIG. 46 provides an example frame format for the TPC response frame 4600 used in the procedure described above by a STA. The TPC response frame may include but is not limited to a category field 4601, spectrum management action field 4602, dialog token field 4603, a TPC report field 4604. The TPC report field 4604 may include but is not limited to an element ID field 4605, length field 4606, link margin for the associated AP field 4607, link margin for AAP1 field 4608, and link margin for AAP2 field 4609. The category field 4601 may be set to 0 to represent spectrum management. The spectrum management action field 4602 may be set to 3 to represent a TPC response frame. The link margin for the associated AP field 4607 may be used to represent the link margin that the STA has assuming the same transmit rate and transmit power from the associated AP is used. The link margin for the assistant AP1 field 4608 and the link margin for the assistant AP2 4609 may be used to represent the link margin that the STA has assuming the same transmit rate and transmit power form assistant AP1 and assistant AP2 respectively.

FIG. 47 provides an example of a second frame format for the TPC response frame 4700 used in the procedure described above by a STA. The STA may also choose to respond with a TPC response frame, as illustrated in the example of FIG. 47 where an explicit power control command for each involved AP is included in the TPC report IE. The TPC response frame may include but is not limited to a category field 4701, spectrum management action field 4702, dialog token field 4703, and a TPC report field 4704. The TPC report field 4704 may include but is not limited to an element ID field 4705, length field 4706, power control command for the associated AP field 4707, power control command for the AAP1 field 4708, and power control command for the AAP2 field 4709.

Signaling and associated procedures may be used to estimate the power level a STA uses on wake-up from power saving mode in accordance with a seventh embodiment, which may be used in combination with any of the other embodiments described herein. In 802.11 WLAN power saving (PS), all STAs in PS mode may be synchronized to wake up at the same time. This may be based on the beacon interval. An announcement frame may be broadcast to indicate if a STA has any data. In infrastructure networks, the announcement frame may be the traffic indication map (TIM) and may be transmitted with the beacon. In a contention free period (CFP), the AP may poll the STAs with data in the TIM using standard PCF access rules. Outside the CFP, the STA may request the AP to transmit its data by sending a Power-Save Poll (PS-Poll) using the DCF contention mechanism. In independent networks, the announcement frame may be the asynchronous traffic indication map (ATIM) and may be transmitted by any station during an ATIM window. In this case, unicast ATIMs may be acknowledged by the receiver. In these different scenarios, when the STA wakes up from the PS mode, the initial power level that the STA transmitter uses may be too small to support a P2P link, or too large causing unnecessary interference in an Extended Service Set (ESS) with multiple APs. TPC schemes or procedures which alleviate this issue are described below to ensure optimal network performance.

To enable the AP or STA use the proper power on wake-up, the following steps may be performed. The beacon may include a TPC report with the transmit power used by the AP. This may be for both infrastructure and independent networks and may enable each STA to estimate the path loss from the AP to the STA and estimate the correct transmit power on uplink transmission.

Outside the Contention Free Period in infrastructure networks, the PS-poll may be modified to include information on the desired transmit power. This may enable the AP to estimate the path loss from STA to AP (or the STA to recommend a transmit power) for downlink transmissions. The signaling used may be an explicit modification of the PS-Poll frame to include the desired transmit power, transmit power of the STA, link margin, STA power increase/decrease recommendation, or a combination thereof. The signalling used may also be an aggregation of the PS-Poll element and the link margin information, for example, the DMG Link Margin element.

In independent networks, the ATIM ACK may include information on the desired transmit power. This may be an explicit modification of the ATIM ACK frame to include the desired transmit power, transmit power of the STA, link margin, STA power increase/decrease recommendation, or a combination thereof. This may also be an aggregation of the ATIM ACK element and the link margin information, for example, DMG Link Margin element.

In cases where there are multiple frame transmissions between the AP and the STA in either an ATIM ACK window (independent networks) or a TIM window (infrastructure networks), closed loop power control as described in the second embodiment may be used. In any case, the PS-Poll frame or the ATIM ACK frame may be modified to include a TPC-SIG with an absolute transmit power request as in the first embodiment.

In the case of multi-antenna STAs, the transmit power requested may be based on a single antenna transmission. The PS-Poll frame or the ATIM ACK frame may include a flag indicating the desired transmit antenna.

An exemplary procedure in an infrastructure network using point coordination for multiple access with power management may be as follows:

The AP may use CF-polling to access the channel. The AP may then broadcast the TIM. The STAs in power saving mode may then check the TIM for their IDs. The AP may then poll each STA with traffic in the TIM. The STAs may then send a PS-Poll to the AP. Based on the TPC report in the beacon, the STAs may estimate the path loss between the AP and themselves and may send the PS-poll at the desired power. The PS-poll may include a TPC report or similar information to enable the AP to estimate the correct transmit power. The AP may then send the buffered packets with the estimated power.

In the DCF mode in an infrastructure network, the PS-poll from the STA to the AP may be sent by contention (if there is information for the STA in the TIM). The PS-poll transmit power may be calculated in the same manner as in the PCF contention mode and may include the same additional information. One example difference may be that it accesses the channel by contention. The AP may send its information in the same manner.

Embodiments:

1. A method for performing simultaneous multiple loop power control in a wireless network, comprising:

   using separate power control loops for communication with an entire wireless network and for point-to-point transmissions.

2. The method of embodiment 1, wherein the power control loop for communication with the entire wireless network is used to control the power needed for network coverage.

3. The method of embodiments 1 or 2, wherein the power control loop for point-to-point transmissions controls the power for point-to-point transmissions between two wireless transmit/receive units.

4. A method for performing simultaneous multiple loop power control in a wireless network, comprising:

   using separate power control loops for directional or sector based communication and for omni-directional communication.

5. The method of any one of embodiments 1-4, wherein the method is performed in a wireless local area network.

6. The method of embodiment 5, further comprising:

   an access point (AP) signaling its transmit power control (TPC) capability to an associated station (STA).

7. The method of embodiment 6, wherein the signaling includes signaling a number of power control loops that will be used.

8. The method of embodiment 7, wherein the number of power control loops that will be used is signaled in any one of: a modified power capability element or a new extended capabilities element.

9. The method of any one of embodiments 6-8, further comprising:

   setting up a TPC loop between the AP and the STA using an exchange format between the AP and the STA.

10. The method of embodiment 9, wherein the setting up includes negotiating frame types that belong to each TPC loop.

11. The method of embodiment 10, wherein the frame types in each TPC loop are predetermined.

12. The method of embodiment 10, wherein an information element is used which includes a field that describes a number of TPC loop indicies available and pairs of fields that describe the frame types and the associated TPC loop index.

13. The method of embodiment 12, wherein the frame type is identified using a type field and a sub-type field in a frame control field.

14. The method of any one of embodiments 6-13, further comprising:

labeling each TPC loop to identify the loops.

15. The method of embodiment 14, wherein the labeling includes creating an identifier based on a combination of the STA identifier and the TPC identifier.

16. The method of any one of embodiments 6-15, further comprising:

performing a TPC adjustment procedure between the AP and the STA for each loop.

17. The method of embodiment 16, wherein the power control loop is any one of: a slow closed loop or a periodic closed loop.

18. The method of any one of embodiments 6-17, further comprising:

using multi-level signaling by the AP and/or the STA for each TPC loop.

19. The method of embodiment 18, wherein a TPC request element is modified to include the TPC identifier of the TPC loop.

20. The method of embodiment 18, wherein a TPC report element is modified to include the TPC identifier of the TPC loop.

21. The method of embodiment 18, wherein a directional multi-gigabit (DMG) link margin element is modified to include the TPC identifier of the TPC loop.

22. The method of any one of embodiments 19-21, wherein the elements are modified to include multiple TPC loops.

23. The method of any one of embodiments 19-21, wherein the elements are aggregated in one frame.

24. The method of any one of embodiments 1-23, further comprising:

checking the TPC capabilities of the AP and the STA.

25. The method of embodiment 24, wherein on a condition that the AP and/or the STA do not support multiple power control loops or are instructed not to use multiple power control loops, packet transmission follows a legacy procedure.

26. The method of embodiment 24, further comprising:

configuring a transceiver at the AP and a transceiver at the STA for the indicated power control mode.

27. The method of embodiment 26, further comprising:

the STA configuring an initial reference receive power for the TPC loops.

28. The method of embodiment 27, wherein the initial reference receive power for the TPC loops is predetermined.

29. The method of embodiment 27, wherein the initial reference receive power for the TPC loops is set relative to each other.

30. The method of any one of embodiments 1-29, further comprising:

sending an acknowledgement frame on a condition that the TPC loops are successfully established.

31. The method of any one of embodiments 1-30, further comprising:

the STA configuring its receiver on a condition that the signaling indicates a directional or an omni-directional transmission mode is used.

32. A method for performing transmit power control (TPC) in a wireless network, comprising:

using physical layer signaling, including a TPC signal (TPC SIG).

33. The method of embodiment 32, wherein:

the wireless network is a wireless local area network; and
the power control is performed between any one or more of:

an access point (AP) to a station (STA) for downlink transmissions;
a STA to an AP for uplink transmissions; or
a STA to another STA for transmissions in an independent basic service set.

34. The method of embodiments 32 or 33, wherein the TPC SIG includes two orthogonal frequency division multiplexing symbols.
35. The method of any one of embodiments 32-34, wherein the TPC SIG includes:

a STA transmit power field;
a STA link margin field;
a power change action field;
a cyclic redundancy check field; or
one or more tail bits.

36. The method of embodiment 35, wherein the STA transmit power field includes an absolute value for use in open loop TPC.
37. The method of embodiment 35, wherein the STA transmit power field includes a relative value for use in closed loop TPC.
38. The method of any one of embodiments 35-37, wherein the STA link margin field includes an absolute value or a relative value.
39. The method of any one of embodiments 35-38, wherein the power change action field indicates an action for closed loop power control.
40. The method of any one of embodiments 32-39, wherein the TPC SIG is placed after legacy and high throughput or very high throughput fields in a frame.
41. The method of any one of embodiments 32-40, further comprising:

using explicit signaling to enable differentiation between packets that support the TPC SIG.

42. The method of embodiment 41, wherein the explicit signaling includes using a TPC SIG present flag to indicate the presence of a TPC SIG.
43. The method of any one of embodiments 32-40, further comprising:

using robust automatic detection to enable differentiation between packets that support the TPC SIG.

44. The method of embodiment 43, wherein the robust automatic detection includes rotating the TPC SIG to differentiate the TPC SIG from other signals.
45. The method of embodiment 43, wherein the robust automatic detection includes using pilot based automatic detection in which a polarity of a pilot signal is used to signal the presence of a TPC SIG.
46. The method of any one of embodiments 32-45, further comprising:

checking the STA's TPC capabilities, including checking whether the STA can support physical layer TPC.

47. The method of embodiment 46, further comprising:

sending a TPC request frame from the AP to the STA.

48. The method of embodiments 46 or 47, further comprising:

sending a TPC recommendation frame from the STA.

49. The method of embodiment 48, further comprising:

sending a TPC SIG from the STA to the AP.

50. The method of embodiment 49, further comprising:

on a condition that open loop TPC is used, the TPC SIG includes a transmit power used in the frame and an estimated link margin based on previous transmissions.

51. The method of embodiments 49 or 50, further comprising:

after receiving the TPC SIG, the AP dynamically adapts the transmit power used to send subsequent packets to the STA.

52. The method of embodiment 51, wherein the AP uses a path loss and a link margin estimate to adapt the transmit power.
53. The method of any one of embodiments 49, 51, or 52, further comprising:

on a condition that closed loop TPC is used, the TPC SIG includes a recommendation to increase the transmit power, decrease the transmit power, or keep the transmit power unchanged.

54. The method of embodiment 53, wherein the TPC SIG further includes an amount by which the power is changed.
55. A method for partially compensated open loop power control in a wireless network, comprising:

using a modified link margin response frame to indicate a response of a receiver to transmit power control (TPC) signaling during the procedure.

56. The method of embodiment 55, wherein traditional open loop power control is scaled by a scaling factor, whereby a station (STA) may transmit at a lower power to an access point (AP).
57. The method of embodiments 55 or 56, wherein the method is performed at a medium access control (MAC) layer.
58. The method of any one of embodiments 55-57, further comprising:

checking the TPC capabilities of the sending STA.

59. The method of embodiment 58, further comprising:

sending a link margin request from the sending STA to a receiving STA or receiving AP.

60. The method of embodiment 59, wherein the link margin request is for a single sending STA or for a group of sending STAs.
61. The method of any one of embodiments 58-60, further comprising:

sending a link margin response from the receiver to the sending STA.

62. The method of embodiment 61, wherein the link margin response includes a duration element and the scaling factor.
63. The method of embodiment 62, wherein the duration element and the scaling factor apply to a single sending STA or to a group of sending STAs.
64. The method of any one of embodiments 61-63, further comprising:

sending a link margin acknowledgement.

65. The method of embodiment 64, further comprising:

performing normal packet transmission, at the scaled power level.

66. The method of any one of embodiments 55-65, wherein the method is performed at a physical layer.
67. The method of embodiment 66, wherein the duration element and the scaling factor are included in a physical layer preamble as part of an extended TPC signal (TPC SIG) field.
68. The method of embodiment 67, wherein the extended TPC SIG includes one orthogonal frequency division multiplexing symbol.
69. The method of embodiments 67 or 68, wherein the extended TPC SIG includes: a duration of partial compensation, the scaling factor, cyclic redundancy check bits, and tail bits.

70. The method of any one of embodiments 66-69, wherein a group of STAs may be assigned a group identifier, which is included in the extended TPC SIG.

71. The method of any one of embodiments 66-70, further comprising:

evaluating TPC capabilities of the AP and the STA.

72. The method of embodiment 71, further comprising:

sending a ready to send (RTS) frame from the STA to the AP.

73. The method of embodiment 72, further comprising:

sending a clear to send (CTS) frame from the AP to the STA, the CTS frame including the extended TPC SIG.

74. The method of embodiment 73, further comprising:

the STA transmits with a power level compensated by the scaling factor.

75. The method of any one of embodiments 55-74, further comprising:

sending a group identifier assignment frame from the AP to all STAs in the group.

76. The method of embodiment 75, further comprising:

monitoring packets sent to the group by a STA in the group; and
decoding and processing the packets addressed to the group by the STAs in the group.

77. A method for closed loop transmit power control (TPC), comprising:

a receiver sending a request to a transmitter to change the transmitted power.

78. The method of embodiment 77, wherein the request is sent continually or periodically.

79. The method of embodiments 77 or 78, further comprising:

performing a TPC setup procedure between the receiver and the transmitter.

80. The method of embodiment 79, wherein the setup procedure includes defining a period of time that the closed loop TPC will operate.

81. The method of embodiments 79 or 80, further comprising:

sending an acknowledgement from the transmitter to the receiver.

82. A method for enabling multiple power control levels in a transmit-receive wireless network session, comprising:

transmitting all management frames from an access point (AP) at a network power level, to ensure that all stations (STAs) are able to decode the management frames;
negotiating a data transmission power level between the AP and each STA individually, to ensure that a minimum point-to-point power level required to maintain the transmission is used.

83. The method of embodiment 82, further comprising:

checking the STA's transmit power control (TPC) capabilities.

84. The method of embodiment 83, wherein the checking includes using a capabilities information field.

85. The method of any one of embodiments 82-84, wherein a data frame is transmitted at two different power levels.

86. The method of embodiment 85, wherein a preamble of the data frame is transmitted at the network power level.

87. The method of embodiments 85 or 86, wherein a service field and data are transmitted at the point-to-point power level.

88. The method of any one of embodiments 82-87, further comprising:

using a TPC change boundary to indicate when the transmission power level should be changed.

89. The method of embodiment 88, wherein the TPC change boundary is indicated by inserting a short training field at the TPC change boundary.

90. The method of embodiment 89, wherein the presence of the short training field is indicated by a TPC indicator bit.

91. The method of embodiment 89, wherein the presence of the short training field is indicated by using an automatic detect feature.

92. The method of embodiment 91, wherein the automatic detect feature includes rotating a signal including the short training field.

93. The method of any one of embodiments 82-92, further comprising:

transmitting specific frame types at fixed power levels.

94. The method of embodiment 93, further comprising:

defining the frame types to be transmitted an a power level that each frame type will be transmitted at during the transmit-receive session.

95. A method for interference coordination in dense wireless networks, comprising:

modifying a clear channel assessment (CCA) threshold for a station (STA) on a condition that transmit power control (TPC) is implemented.

96. The method of embodiment 95, further comprising:

signaling a CCA threshold and a CCA threshold margin, wherein the CCA threshold is an energy detect CCA threshold used in a basic service set (BSS) and the CCA threshold margin is a difference between the CCA threshold and a CCA value estimated by the STA.

97. The method of embodiments 95 or 96, further comprising:

sending a measurement request from an access point (AP) to each STA in the BSS.

98. The method of embodiment 97, wherein the measurement request includes a CCA request element, a measurement start time, and a measurement duration.

99. The method of embodiments 97 or 98, further comprising:

each STA replying with a measurement report to the AP containing a CCA measurement report.

100. The method of embodiment 99, further comprising:

adjusting the CCA threshold and the transmit power by the AP.

101. The method of embodiment 100, wherein the adjusting is based on a fractional duration that the channel was busy during the measurement duration and the CCA threshold margin.

102. The method of embodiments 100 or 101, wherein the adjusting is based on any one or more of: virtual carrier sensing utilization, physical carrier sensing based on a preamble decode based utilization, overall AP backoff statistics, or group based CCA threshold signaling.

103. The method of any one of embodiments 82-102, further comprising:

adjusting the coverage of a BSS to reduce an amount of interference to a neighboring BSS.

104. The method of embodiments 103, further comprising:

checking the STA's TPC capabilities.

105. The method of embodiment 104, further comprising:

identifying a BSS edge STA by the AP, wherein a BSS edge STA is a STA adversely affected by a neighboring BSS during reception or a STA that adversely affects the neighboring BSS during transmission.

106. The method of embodiments 105, wherein the identifying includes any one of:

ranking STAs by the AP based on a path loss estimate, with a portion of the STAs identified as BSS edge STAs; using the geographical location of the STAs; using a difference between a received signal strength indicator of the associated AP and a next strongest AP; or transmitting a BSS edge indicator by a STA that has already been identified as a BSS edge STA.

107. A method for performing transmit power control (TPC) for multiple channels in a wireless network, comprising:

negotiating between an access point (AP) and a station (STA) to determine the TPC that will occur on each of a number of non-contiguous transmission channels.

108. The method of embodiment 107, further comprising:

defining a primary channel and multiple secondary channels.

109. The method of embodiment 108, wherein the primary channel is any channel in a non-contiguous aggregated case.
110. The method of embodiment 108, wherein the primary channel is a lower frequency channel in a multi-band case.
111. The method of any one of embodiments 108-110, further comprising:

performing a TPC operation on the primary channel only.

112. The method of any one of embodiments 108-111, further comprising:

sending TPC parameters for the secondary bands as a differential signal with the reference being the primary band.

113. The method of any one of embodiments 108-110, further comprising:

performing TPC independently for the primary channel and the secondary channels; and performing TPC signaling independently per band.

114. The method of any one of embodiments 108-110, further comprising:

performing TPC independently for the primary channel and the secondary channels; and performing TPC signaling relative to the primary channel.

115. The method of any one of embodiments 108-110, further comprising:

performing TPC on the primary band only; and the secondary bands infer the TPC parameters from feedback in the primary band.

116. The method of any one of embodiments 108-110, further comprising:

performing TPC over multiple bands as if it is a single frequency band.

117. The method of any one of embodiments 107-116, further comprising:

performing uplink power control for multi-user multi-channel transmissions.

118. A method for performing transmit power control (TPC) in a wireless system having multiple transmitters and a single receiver, comprising:

using a TPC request and TPC response exchange procedure prior to beginning the multiple transmissions.

119. The method of embodiment 118, wherein the TPC response includes an explicit power control command for each of the multiple transmitters.

120. A method for determining a transmit power to use at a wireless station (STA) in response to the STA waking up from a power saving mode, comprising:

including a transmit power control (TPC) report in a beacon signal sent by an access point (AP).

121. The method of embodiment 120, further comprising:

in an infrastructure network, outside a contention free period, using a poll frame to include information on a desired transmit power.

122. A wireless station configured to perform the method of any one of embodiments 1-121
123. An access point configured to perform the method of any one of embodiments 1-121.
124. An integrated circuit configured to perform the method of any one of embodiments 1-121.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, STA, terminal, base station, RNC, or any host computer.

ASPECTS

1. A method for use in an access point (AP) for interference coordination in a wireless local area network (WLAN), the method comprising:

transmitting, by the AP, a measurement request to a plurality of mobile stations (STAs) in the WLAN;
receiving, by the AP, a measurement report from each of the plurality of mobile STAs, wherein each measurement report includes a clear channel assessment (CCA) threshold margin value and a CCA busy fraction measurement value;
determining, by the AP, whether to modify transmission power in the WLAN and a CCA threshold for the WLAN based on each received measurement report; and
transmitting, by the AP, a CCA modification element to the plurality of mobile STAs on a condition that the CCA threshold for the WLAN is modified, wherein the CCA modification element includes a modified CCA threshold value.

2. The method of aspect 1, further comprising:

modifying the transmission power in the WLAN on a condition that the received measurement reports indicate that the included CCA busy fraction measurement value and the included CCA threshold margin value indicate a busy channel.

3. The method of aspect 1, further comprising:

modifying the transmission power in the WLAN on a condition that the received measurement reports indicate that the included CCA busy fraction measurement value indicates an idle channel.

4. The method of aspect 1, further comprising:

modifying the transmission power in the WLAN on a condition that the received measurement reports indicate that the included CCA threshold margin value indicates an idle channel.

5. The method of aspect 1, further comprising:

determining a first transmit power control loop for network coverage and a second transmit power control loop for point-to-point (P2P) transmissions;
determining a duration associated with the first transmit power control loop for network coverage and a duration associated with the second transmit power control loop for P2P transmissions;
transmitting frames using a transmission power associated with the first transmit power control loop for network coverage; and
transmitting frames using a transmission power associated with the second transmit power control loop for P2P transmissions.

6. The method of aspect 1, further comprising:

determining a first transmit power control loop for omni-directional transmissions and a second transmit power control loop for directional transmissions.

7. The method of aspect 1, further comprising:

determining a transmit power for each STA from the plurality of STAs to use on wake-up from power saving mode.

8. The method of aspect 1, further comprising:

modifying transmission power to reduce interference with a neighboring transmission.

9. A method for use in an access point (AP) for interference coordination in a wireless local area network (WLAN), the method comprising:

transmitting, by the AP, a measurement request to a plurality of mobile stations (STAs) in the WLAN;
receiving, by the AP, a measurement report from each of the plurality of mobile STAs, wherein each measurement report includes a clear channel assessment (CCA) threshold margin value and a CCA busy fraction measurement value;
determining, by the AP, whether to modify a CCA threshold in the WLAN based on each received measurement report; and
transmitting, by the AP, a CCA modification element to the plurality of mobile STAs on a condition that the CCA threshold for the WLAN is modified, wherein the CCA modification element includes a modified CCA threshold value.

10. The method of aspect 9, wherein the CCA busy fraction measurement value and the CCA threshold margin value indicate a busy channel.

11. The method of aspect 9, wherein the CCA busy fraction measurement value indicates an idle channel.

12. The method of aspect 9, wherein the CCA threshold margin value indicates an idle channel.

13. An access point (AP) configured for interference coordination in a wireless local area network (WLAN), the AP comprising:

a transmitter configured to transmit a measurement request to a plurality of mobile stations (STAs) in the WLAN;
a receiver configured to receive a measurement report from each of the plurality of mobile STAs, wherein each measurement report includes a clear channel assessment (CCA) threshold margin value and a CCA busy fraction measurement value;
a processor configured to determine whether to modify transmission power in the WLAN and a CCA threshold for the WLAN based on each received measurement report; and
the transmitter further configured to transmit a CCA modification element to the plurality of STAs on a condition that the CCA threshold for the WLAN is modified, wherein the CCA modification element includes a modified CCA threshold value.

14. The AP of aspect 13, further comprising:

the processor further configured to determine a first transmit power control loop for network coverage and a second transmit power control loop for P2P transmissions.

15. A mobile station (STA) configured for interference coordination in a wireless local area network (WLAN), the STA comprising:

a receiver configured to receive a measurement request from an access point (AP);
a transmitter configured to transmit a measurement report measurement to the AP, wherein the measurement report includes a clear channel assessment (CCA) threshold margin value and a CCA busy fraction measurement value;
the receiver further configured to receive from the AP a CCA modification element, wherein the CCA modification element includes a modified CCA threshold value; and
the receiver further configured to receive a modified transmission power from the AP.

## Claims

1. A method for use in an access point, AP, for interference coordination in a wireless local area network, WLAN, the method comprising:

transmitting, by the AP, a measurement request to a plurality of mobile stations, STAs, in the WLAN;
receiving, by the AP, a measurement report from each of the plurality of mobile STAs, wherein each measurement report includes a measurement that is indicative of interference and is a difference between a clear channel assessment, CCA, threshold for the WLAN and energy estimated by the STA;
determining, by the AP, whether to modify transmission power in the WLAN and the CCA threshold for the WLAN based on each received measurement report; and
transmitting, by the AP, a CCA modification element to the plurality of mobile STAs on a condition that the CCA threshold for the WLAN is modified, wherein the CCA modification element includes a modified CCA threshold value.

2. The method of claim 1, further comprising:

modifying the transmission power in the WLAN based on the received measurement reports.

3. The method of claim 1, further comprising:

determining a first transmit power control loop for network coverage and a second transmit power control loop for point-to-point, P2P, transmissions;
determining a duration associated with the first transmit power control loop for network coverage and a duration associated with the second transmit power control loop for P2P transmissions;
transmitting frames using a transmission power associated with the first transmit power control loop for network coverage; and
transmitting frames using a transmission power associated with the second transmit power control loop for P2P transmissions.

4. The method of claim 1, further comprising:

determining a first transmit power control loop for omni-directional transmissions and a second transmit power control loop for directional transmissions.

5. The method of claim 1, further comprising:

determining a transmit power for each STA from the plurality of STAs to use on wake-up from power saving mode.

**6.** The method of claim 1, further comprising:

modifying transmission power to reduce interference with a neighboring transmission.

**7.** An access point, AP, configured for interference coordination in a wireless local area network, WLAN, the AP comprising:

a transmitter configured to transmit a measurement request to a plurality of mobile stations, STAs, in the WLAN;
a receiver configured to receive a measurement report from each of the plurality of mobile STAs, wherein each measurement report includes a measurement that is indicative of interference and is a difference between a clear channel assessment, CCA, threshold for the WLAN and energy estimated by the STA;
a processor configured to determine whether to modify transmission power in the WLAN and the CCA threshold for the WLAN based on each received measurement report; and
the transmitter further configured to transmit a CCA modification element to the plurality of mobile STAs on a condition that the CCA threshold for the WLAN is modified, wherein the CCA modification element includes a modified CCA threshold value.

**8.** The AP of claim 7, further comprising:

the processor further configured to modify the transmission power in the WLAN based on the received measurement reports.

**9.** The AP of claim 7, further comprising:

the processor further configured to determine a first transmit power control loop for network coverage and a second transmit power control loop for point-to-point, P2P, transmissions;
the processor further configured to determine a duration associated with the first transmit power control loop for network coverage and a duration associated with the second transmit power control loop for P2P transmissions;
the transmitter further configured to transmit frames using a transmission power associated with the first transmit power control loop for network coverage; and
the transmitter further configured to transmit frames using a transmission power associated with the second transmit power control loop for P2P transmissions.

**10.** The AP of claim 7, further comprising:

the processor further configured to determine a first transmit power control loop for omni-directional transmissions and a second transmit power control loop for directional transmissions.

**11.** The AP of claim 7, further comprising:

the processor further configured to determine a transmit power for each STA from the plurality of STAs to use on wake-up from power saving mode.

**12.** The AP of claim 7, further comprising:

the processor further configured to modify transmission power to reduce interference with a neighboring transmission.

**13.** A mobile station, STA, configured for interference coordination in a wireless local area network, WLAN, the STA comprising:

a receiver configured to receive a measurement request from an access point, AP;
a transmitter configured to transmit a measurement report measurement to the AP, wherein the measurement report includes a measurement that is indicative of interference and is a difference between a clear channel assessment, CCA, threshold for the WLAN and energy estimated by the STA;
the receiver further configured to receive from the AP a CCA modification element, wherein the CCA modification element includes a modified CCA threshold value; and

the receiver further configured to receive a modified transmission power from the AP.

**14.** The STA of claim 13, wherein the modified transmission power is used on wake-up from power saving mode.

**15.** The STA of claim 13, wherein the modified transmission power reduces interference with a neighboring transmission.

FIG. 1A

*FIG. 1B*

41

FIG. 1C

EP 3 236 698 A1

FIG. 2

FIG. 3

400

| 1. TPC CAPABILITIES SIGNALING |
401

| 2. MULTI-LEVEL TPC SETUP |
402

| 3. TPC LOOP LABELING |
403

| TPC OPERATION LOOP 1 -4. TYPE: OPEN-LOOP ETC -5. SIGNALING |
404

| TPC OPERATION LOOP 2 -4. TYPE: OPEN-LOOP ETC -5. SIGNALING |
405

| TPC OPERATION LOOP N -4. TYPE: OPEN-LOOP ETC -5. SIGNALING |
406

*FIG. 4*

500

501

502

| 1) BTI | 2) A-BFT | 3) AT | CBAP | 4)DTT | SP | SP | SP |

503   504   505   506   507   508   509   TIME

*FIG. 5*

EP 3 236 698 A1

| | | | | | | | | | | |
|---|---|---|---|---|---|---|---|---|---|---|
| 601 | 602 | 603 | 604 | 605 | 606 | 607 | 608 | 609 | 610 | 611 |
| EID | LENGTH | NUMBER OF TPC LOOPS | FRAME TYPE 00 | TPC INDEX 00 | FRAME TYPE 01 | TPC INDEX 01 | FRAME TYPE 10 | TPC INDEX 10 | FRAME + SUBFRAME TYPE | TPC INDEX |
| NUMBER OF BITS  8 | 8 | 2 | 2 | 2 | 2 | 2 | 2 | 2 | 6 | 2 |

600

*FIG. 6*

| | | | | | | |
|---|---|---|---|---|---|---|
| 701 | 702 | 703 | 704 | 705 | 706 | 707 |
| EID | LENGTH | TPC INDEX 00 | TPC INDEX 01 | TPC INDEX 10 | FRAME + SUBFRAME TYPE | TPC INDEX |
| NUMBER OF BITS  8 | 8 | 2 | 2 | 2 | 6 | 2 |

700

*FIG. 7*

800

STA1 ~801

810

811

813

AP STA2 ~802

803 812

*FIG. 8*

900

901 902 903

| ELEMENT ID=34 | LENGTH=1 | TPCID |
|---|---|---|
| 1 | 1 | 1 |

OCTETS

*FIG. 9*

**FIG. 10**

1000

OCTETS

| ELEMENT ID=35 | LENGTH=3 | TRANSMIT POWER | LINK MARGIN | TPCID |
|---|---|---|---|---|
| 1 | 1 | 1 | 1 | 1 |
| 1001 | 1002 | 1003 | 1004 | 1005 |

**FIG. 11**

1100

OCTETS

| ELEMENT ID=162 | LENGTH=11 | ACTIVITY | MCS | LINK MARGIN | SNR | REFERENCE TIME STAMP | TPCID |
|---|---|---|---|---|---|---|---|
| 1 | 1 | 1 | 1 | 1 | 1 | 4 | 1 |
| 1101 | 1102 | 1103 | 1104 | 1105 | 1106 | 1107 | 1108 |

**FIG. 12**

1200

OCTETS

| ELEMENT ID=34 | LENGTH=2 | TPCID1 | TPCID2 |
|---|---|---|---|
| 1 | 1 | 1 | 1 |
| 1201 | 1202 | 1203 | 1204 |

48

FIG. 13

FIG. 14

EP 3 236 698 A1

1500

| 1501 | 1502 | 1503 | 1504 |
|---|---|---|---|
| Tx POWER 8 BITS | LINK MARGIN 8 BITS | ACTION 2 BITS | RESERVED 6 BITS |

TPC SIG-A 1505

| 1510 | 1511 | 1512 |
|---|---|---|
| RESERVED 14 BITS | CRC 4 BITS | TAIL 6 BITS |

TPC SIG-B 1513

*FIG. 15*

1600

| 1601 | 1602 | 1603 | 1604 | 1605 | 1606 | 1607 | | 1608 | 1609 | 1610 | 1611 | 1612 |
|---|---|---|---|---|---|---|---|---|---|---|---|---|
| L-STF | L-LTF | L-SIG | HT-SIG1 | HT-SIG2 | HT-STF | HT-LTF1 | ... | HT-LTFN | TPC-SIG-A | TPC-SIG-B | SERVICE FEILD | HT DATA |

*FIG. 16*

FIG. 17

1800

1801

Link Margin Request, Tx pwr = P

AP

Link Margin Response
Duration, alpha, Tx pwr = P

1802

1803

STA11

RTS, Tx pwr =alpha * P

AP

CTS, Tx pwr = alpha * P

1804

STA11

1805

DATA, Tx power = alpha * P

AP

ACK, Tx power = alpha * P

1806

STA11

1807

AP

RTS, Tx pwr =alpha * P

STA14

CTS, Tx pwr = P

AP

1808

1809

DATA, Tx power = alpha * P

1810

ACK, Tx power = alpha * P

AP

STA14

1811

AP

RTS, Tx pwr = P

STA15

CTS, Tx pwr = P

AP

1812

DATA, Tx power = P

1813

1814

ACK, Tx power = P

AP

STA15

DURATION

FIG. 18

FIG. 19

1900

| 1901 | 1902 | 1903 | 1904 | 1905 | 1906 |
|---|---|---|---|---|---|
| ELEMENT ID | LENGTH=4 | TRANSMIT POWER | LINK MARGIN | DURATION | ALPHA |
| 1 | 1 | 1 | 1 | 1 | 1 |

OCTETS

FIG. 20

2000

| 2001 | 2002 | 2003 | 2004 | 2005 | 2006 | 2007 | 2008 | 2009 |
|---|---|---|---|---|---|---|---|---|
| ELEMENT ID=162 | LENGTH=11 | ACTIVITY | MCS | LINK MARGIN | SNR | REFERENCE TIME STAMP | DURATION | ALPHA |
| 1 | 1 | 1 | 1 | 1 | 1 | 4 | 1 | 1 |

FIG. 21

2100

| 2101 | 2102 | 2103 | 2104 |
|---|---|---|---|
| DURATION 8 BITS | ALPHA 8 BITS | CRC 2 BITS | TAIL 6 BITS |

OCTETS

2200

| 2201 | 2202 | 2203 | 2204 | 2205 | 2206 | 2207 |
|---|---|---|---|---|---|---|
| ELEMENT ID | LENGTH | ASSIGNED GROUPID | STA1 ADDRESS | STA2 ADDRESS | | STA N ADDRESS |

OCTETS: 1 — 1 — 1 — 6 — 6 — 6 — 6

**FIG. 22**

2300

| 2301 | 2302 | 2303 |
|---|---|---|
| DURATION 8 BITS | ALPHA 8 BITS | TPC GROUP ID 8 BITS |

TPC SIG-A 2304

| 2311 | 2312 | 2313 |
|---|---|---|
| RESERVED 14 BITS | CRC 4 BITS | TAIL 6 BITS |

TPC SIG-B 2314

**FIG. 23**

EP 3 236 698 A1

2400

| 2401 | 2402 | 2403 |
|------|------|------|
| ELEMENT ID | LENGTH=1 | TYPE: PRIMARY/ SECONDARY INTERVAL: TPTT |

OCTETS      1     1     1

FIG. 24

2500

| 2501 | 2502 |
|------|------|
| ELEMENT ID | LENGTH=0 |

OCTETS     1     1

FIG. 25

2600

| 2601 | 2602 | 2603 | 2604 |
|------|------|------|------|
| ELEMENT ID | LENGTH=2 | ACTION | REFERENCE TIME STAMP |

OCTETS     1     1     1

FIG. 26A

| 2605 | 2606 | 2607 |
|------|------|------|
| ELEMENT ID | LENGTH=1 | ACTION |

OCTETS     1     1     1

FIG. 26B

FIG. 27

FIG. 28

FIG. 29

FIG. 30

3000

| ELEMENT ID | LENGTH | CAPABILITIES |
|---|---|---|
| 1 | 1 | 1 |

3001  3002  3003

OCTET

FIG. 31

3100

| RATE 4 BITS | TPC INDICATOR 1 BIT | LENGTH 12 BITS | PARITY 1 BIT | TAIL 6 BITS |
|---|---|---|---|---|

3101  3102  3103  3104  3105

FIG. 32

3200

| STF | LTF | SIG | TPC-STF | |
|---|---|---|---|---|

3201  3202  3203  3204  3205

EP 3 236 698 A1

AP
3301

STA
3302

3300

RTS, Tx pwr = network power — 3310

CTS, Tx pwr = network power — 3311

— 3312

Preamble, SIG Tx power = network Power

— 3313

PC_STF, Data, Tx power = point-to-point power

ACK, Tx power = point-to-point power — 3314 *FIG. 33*

3400

| 3401 | 3402 | 3403 | 3404 | 3405 | 3406 | 3407 | 3408 | 3409 | 3410 |
|---|---|---|---|---|---|---|---|---|---|
| EID | LENGTH | POWER LEVEL MGMT FRMS | POWER LEVEL CTRL FRMS | POWER LEVEL DATA FRMS | PWR LEVEL RESERVED | FRAME+ SUBFRAME TYPE | PREAM BLE + SIG | RESERVED | PWR LVL CUSTOM |

NUMBER OF BITS    8    8    8    8    8    8    6    1    1    8    *FIG. 34*

*FIG. 35*

| | | | |
|---|---|---|---|
| ELEMENT ID | LENGTH=2 | CCA_MARGIN | CCA_THRESHOLD |

3601 3602 3603 3604 3600

OCTETS  1  1  1  1

*FIG. 36*

| | | |
|---|---|---|
| CCA REQUEST ELEMENT | MEASUREMENT START TIME | MEASUREMENT DURATION |

3701 3702 3703 3700

*FIG. 37A*

| | | | | | |
|---|---|---|---|---|---|
| CHANNEL NUMBER | MEASUREMENT START TIME | MEASUREMENT DURATION | CCA BUSY FRACTION | CCA_MARGIN | CCA_THRESHOLD |

3710 3711 3712 3713 3714 3715

1  8  2  1  1  1

*FIG. 37B*

EP 3 236 698 A1

FIG. 38

3900

START

IDENTIFY BSS EDGE/NON BSS-EDGE STAs — 3901

AP SIGNALS BSS EDGE STAs — 3902

BSS EDGE STAs OR AP IDENTIFY
"INTERFERENCE LIMITED" BSS EDGE STA
MAY ALSO IDENTIFY INTERFERING APs — 3903

INTERFERENCE LIMITED STAs TRANSMIT
INTERFERENCE FLAG DURING TRANSMISSION — 3904

INTERFERING APs SET FRACTIONAL POWER
LEVELS (AND LIMIT CSMA/CA GROUP) DURING
THIS PERIOD — 3905

END

FIG. 39

| 4001 | 4002 | 4003 | 4004 | 4005 | 4006 | 4007 | 4008 | 4009 |
|------|------|------|------|------|------|------|------|------|
| ELEMENT ID | LENGTH | BSSID | BSSID INFORMATION | OPERATING CLASS | CHANNEL NUMBER | PHY TYPE | CCA_THRESHOLD | OPTIONAL SUBELEMENTS |
| 1 | 1 | 6 | 4 | 1 | 1 | 1 | 1 | VARIABLE |

OCTETS

4000

*FIG. 40*

FIG. 41A

START

RECEIVE MULTI-BAND TPC REQUEST FROM STA — 4121

IMPLEMENT MULTI-BAND TPC — 4122

TRANSMIT TPC MULTI-BAND RESPONSE — 4123

END

FIG. 41B

| 4131 | 4132 | 4133 | 4134 | 4135 | 4136 |
|------|------|------|------|------|------|
| TPC INDEPENDENCY | TPC SIG INDEPENDENCY | DIFF TPC QUANTIZATION | TPC SIG ON PRIMARY BAND | TPC PRIMARY BAND | USE TPC PRIMARY PARAMETERS |

FIG. 41C

EP 3 236 698 A1

4200

| 4201a | 4202 | 4203 | 4204 | 4205a | 4206a | 4207a |
|---|---|---|---|---|---|---|

**4201 CHANNEL 1** — G-POLL | ULR | ULR | ULR | G-CTS | DATA | ACK

4201b | 4205b | 4207b

**4202 CHANNEL 2** — G-POLL | G-CTS | DATA | ACK

4201c | 4205c | 4206b | 4207c

**4203 CHANNEL 3** — G-POLL | G-CTS | DATA | ACK

4201d | 4205d | 4206c | 4207d

**4204 CHANNEL 4** — G-POLL | G-CTS | DATA | ACK

*FIG. 42*

4300

**4301 ASSOCIATE AP** — TPCRQ-1 — 4310 — SPATIAL tx 1 — 4314

**4302 ASSISTANT AP1** — TPCRQ-2 — 4311 — SPATIAL tx 2 — 4315

**4303 ASSISTANT AP2** — TPCRQ-3 — 4312 — SPATIAL tx 3 — 4316

**4304 STA** — TPCRP — 4313 — ACK — 4317

*FIG. 43*

EP 3 236 698 A1

| 4401 | 4402 | 4403 | 4404 |
|------|------|------|------|
| CATEGORY | SPECTRUM MANAGEMENT ACTION | DIALOG TOKEN | TPC REQUEST |

4400

| 4405 | 4406 | 4407 | 4408 | 4409 |
|------|------|------|------|------|
| ELEMENT ID | LENGTH | Tx POWER | AAP1 ADDRESS | AAP2 ADDRESS |

*FIG. 44*

| 4501 | 4502 | 4503 | 4504 |
|------|------|------|------|
| CATEGORY | SPECTRUM MANAGEMENT ACTION | DIALOG TOKEN | TPC REQUEST |

4500

| 4505 | 4506 | 4507 |
|------|------|------|
| ELEMENT ID | LENGTH | Tx POWER |

*FIG. 45*

4601　　　4602　　　4603　　　4604　　　　　　4600

| CATEGORY | SPECTRUM MANAGEMENT ACTION | DIALOG TOKEN | TPC REPORT |
|---|---|---|---|

| ELEMENT ID | LENGTH | LINK MARGIN FOR ASSOCIATED AP | LINK MARGIN FOR AAP1 | LINK MARGIN FOR AAP2 |
|---|---|---|---|---|

4605　　　　4606　　　　4607　　　　4608　　　　4609

*FIG. 46*

4701　　　4702　　　4703　　　4704　　　　　　4700

| CATEGORY | SPECTRUM MANAGEMENT ACTION | DIALOG TOKEN | TPC REPORT |
|---|---|---|---|

| ELEMENT ID | LENGTH | POWER CONTROL COMMAND FOR ASSOCIATED AP | POWER CONTROL COMMAND FOR AAP1 | POWER CONTROL COMMAND FOR AAP2 |
|---|---|---|---|---|

4705　　　　4706　　　　4707　　　　4708　　　　4709

*FIG. 47*

Europäisches
Patentamt

European
Patent Office

Office européen
des brevets

# EUROPEAN SEARCH REPORT

Application Number

EP 17 17 3360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | J.KWAK, M.RUDOLF: "Tpc Edt Kwak Rudolf ; 11-05-0498-00-000v-tpc-edt-kwak-rudolf", IEEE DRAFT; 11-05-0498-00-000V-TPC-EDT-KWAK-RUDOLF, IEEE-SA MENTOR, PISCATAWAY, NJ USA, vol. 802.11v, 19 May 2005 (2005-05-19), pages 1-10, XP017689123, * page 2 * * page 4 * * page 7 - page 9 * ----- | 1-15 | INV. H04W52/28 |
| A | WO 2005/011132 A2 (INTERDIGITAL TECH CORP [US]; RUDOLF MARIAN [CA]; DICK STEPHEN G [US];) 3 February 2005 (2005-02-03) * paragraph [0011] - paragraph [0014] * * paragraph [0039] - paragraph [0045] * ----- | 1-15 | |
| A | "ISO/IEC Standard for Information TechnologyTelecommunications and Information Exchange Between SystemsLocal and Metropolitan Area NetworksSpecific RequirementsPart 11: Wireless Medium Access Control (MAC) and Physical Layer (PHY) Specifications Amendment 5: Spectrum and Transmit Power Management Ext", IEEE STANDARD; [IEEE STANDARD], IEEE, PISCATAWAY, NJ, USA, 1 January 2006 (2006-01-01), pages c1-60, XP017603931, ISBN: 978-0-7381-3818-3 * paragraph [7.3.2.22.2] * ----- | 1-15 | TECHNICAL FIELDS SEARCHED (IPC) H04W |

-/--

The present search report has been drawn up for all claims

| Place of search | Date of completion of the search | Examiner |
|---|---|---|
| The Hague | 23 June 2017 | Riposati, Benedetto |

EPO FORM 1503 03.82 (P04C01)

page 1 of 2

Europäisches
Patentamt

European
Patent Office

Office européen
des brevets

## EUROPEAN SEARCH REPORT

Application Number

EP 17 17 3360

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Cisco Systems: "Cisco Aironet 1520, 1130, 1240 Series Wireless Mesh Access Points, Design and Deployment Guide, Release 5.2", , 10 August 2009 (2009-08-10), XP055098287, Retrieved from the Internet: URL:http://www.cisco.com/en/US/docs/wireless/technology/mesh/design/guide/MeshAP_52.pdf [retrieved on 2014-01-24] * page 6; figure 1 * * page 16 * * page 18 * * page 27; figure 14 * ----- | 1-15 | |
| A | US 2010/067473 A1 (CAVE CHRISTOPHER [CA] ET AL) 18 March 2010 (2010-03-18) * paragraph [0057] - paragraph [0060] * ----- | 1-15 | |
| A | US 2002/160800 A1 (ROZMARYN JACK [US]) 31 October 2002 (2002-10-31) * paragraph [0007] - paragraph [0014] * * paragraph [0044] - paragraph [0046] * ----- | 1-15 | TECHNICAL FIELDS SEARCHED (IPC) |

The present search report has been drawn up for all claims

| Place of search | Date of completion of the search | Examiner |
|---|---|---|
| The Hague | 23 June 2017 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 3360

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | Publication date | Patent family member(s) | Publication date |
|---|---|---|---|
| WO 2005011132 A2 | 03-02-2005 | AR 047554 A1 | 25-01-2006 |
| | | AT 472239 T | 15-07-2010 |
| | | AU 2004301616 A1 | 03-02-2005 |
| | | AU 2009202068 A1 | 18-06-2009 |
| | | BR PI0412058 A | 15-08-2006 |
| | | CA 2532645 A1 | 03-02-2005 |
| | | CN 1820516 A | 16-08-2006 |
| | | CN 2812452 Y | 30-08-2006 |
| | | CN 102711144 A | 03-10-2012 |
| | | CN 102711145 A | 03-10-2012 |
| | | DE 202004011196 U1 | 15-09-2005 |
| | | DK 1649702 T3 | 25-10-2010 |
| | | EP 1649702 A2 | 26-04-2006 |
| | | HK 1174178 A1 | 20-11-2015 |
| | | JP 5112799 B2 | 09-01-2013 |
| | | JP 5265720 B2 | 14-08-2013 |
| | | JP 2007532027 A | 08-11-2007 |
| | | JP 2008048440 A | 28-02-2008 |
| | | JP 2011130505 A | 30-06-2011 |
| | | KR 200366339 Y1 | 04-11-2004 |
| | | KR 20050009244 A | 24-01-2005 |
| | | KR 20050091658 A | 15-09-2005 |
| | | KR 20060036088 A | 27-04-2006 |
| | | KR 20090094378 A | 04-09-2009 |
| | | KR 20110036774 A | 08-04-2011 |
| | | MX PA06000639 A | 30-03-2006 |
| | | SG 129442 A1 | 26-02-2007 |
| | | SG 163579 A1 | 30-08-2010 |
| | | TW I275282 B | 01-03-2007 |
| | | TW I351833 B | 01-11-2011 |
| | | TW M260941 U | 01-04-2005 |
| | | TW 200824332 A | 01-06-2008 |
| | | US 2005059422 A1 | 17-03-2005 |
| | | US 2006018284 A1 | 26-01-2006 |
| | | US 2012281634 A1 | 08-11-2012 |
| | | US 2014293876 A1 | 02-10-2014 |
| | | US 2016234056 A1 | 11-08-2016 |
| | | WO 2005011132 A2 | 03-02-2005 |
| US 2010067473 A1 | 18-03-2010 | AR 047183 A1 | 11-01-2006 |
| | | CA 2552774 A1 | 04-08-2005 |
| | | CN 1977479 A | 06-06-2007 |
| | | CN 2884712 Y | 28-03-2007 |
| | | DE 202005000287 U1 | 02-06-2005 |
| | | EP 1714425 A2 | 25-10-2006 |
| | | EP 2861013 A1 | 15-04-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 17 3360

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | Publication date | Patent family member(s) | Publication date |
|---|---|---|---|
| | | JP 4406650 B2 | 03-02-2010 |
| | | JP 2007518358 A | 05-07-2007 |
| | | KR 20050074296 A | 18-07-2005 |
| | | KR 20050095563 A | 29-09-2005 |
| | | TW I308437 B | 01-04-2009 |
| | | TW I331862 B | 11-10-2010 |
| | | TW M275634 U | 11-09-2005 |
| | | TW 200947954 A | 16-11-2009 |
| | | US 2005152313 A1 | 14-07-2005 |
| | | US 2009003299 A1 | 01-01-2009 |
| | | US 2010067473 A1 | 18-03-2010 |
| | | WO 2005069873 A2 | 04-08-2005 |
| US 2002160800 A1 | 31-10-2002 | NONE | |

For more details about this annex : see Official Journal of the European Patent Office, No. 12/82

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61721967 A